# EUROPEAN PATENT SPECIFICATION

(11) **EP 1 513 068 B1**
(45) Date of publication and mention of the grant of the patent: **18.07.2012**
(21) Application number: 03736013.8
(22) Date of filing: 04.06.2003
(51) Int. Cl.: G06F 13/00, H04L 12/18

(54) **CONTROL CONTENT TRANSMISSION METHOD AND STREAMING BROADCASTING SYSTEM**
STEUERINHALTSÜBERTRAGUNGSVERFAHREN UND STREAMING-RUNDSENDESYSTEM
PROCEDE DE TRANSMISSION DE CONTENUS DE COMMANDE ET SYSTEME DE DIFFUSION EN CONTINU

(30) Priority: 05.06.2002 JP 2002164811
(43) Date of publication of application: 09.03.2005
(73) Proprietor: Panasonic Corporation, Kadoma-shi Osaka 571-8501 (JP)
(72) Inventor: KATAOKA, Mitsuteru, Katano-shi, Osaka 576-0034 (JP)
(74) Representative: Gassner, Wolfgang
(86) International application number: PCT/JP2003/007058
(87) International publication number: WO 2003/104998

(56) References cited:
- EP-A- 0 779 759
- WO-A1-01/95533
- JP-A- 2001 274 788
- JP-A- 2001 306 437
- JP-A- 2002 132 607

## Description

### TECHNICAL FIELD

The present invention relates to a non-storage type information service system which automatically provides the user in real-time with a presenter required by the user to view desired content with a viewer, regardless of the presence or absence of the user's request, and more specifically to a non-storage type broadcasting system which automatically updates a viewer.

### BACKGROUND ART

In an information service system, which provides users with a content viewing service, a browser is required for supplying content data to be provided to a presenter which is an input/output device allowing the user to access it through a physical phenomenon. This browser is required to be appropriately updated, as necessary, in accordance with factors such as content data to be presented, a transmission path through which the content data is provided to the user, and the user's browser.

Examples of a conventionally implemented information service system include push-type information delivery services on the Internet, such as PointCast(R) PointCast Network(R) and Microsoft (R) Active Desktop (R) , which involve the use of computers.

The push-type information delivery service can be classified into a storage type and a non-storage type. In the push-type information delivery service of the storage type, content, such as news or a weather forecast, which is broadcast by a broadcast station on the Internet, is received and stored by a reception device on the user side, e.g., a personal computer. In the push-type information delivery service of the non-storage type, content, such as news or a weather forecast, which is broadcast by a broadcast station on the Internet, is received by a reception device on the user side, e.g., a personal computer, and presented to the user in real-time. The user operates the reception device so as to activate the browser, which is a user interface for seeing the content, and thus can view the content stored in the receiver regardless of the storage type or the non-storage type.

Since different content processing methods are used for different services, the browser varies from one service to another. Therefore, it is possible to realize a user interface which is flexibly compatible with each service. If the browser is required to be upgraded, the user uses a function programmed to the browser itself to receive a new browser. Then, the current browser can be updated to the latest version by replacing it with the newly received browser.

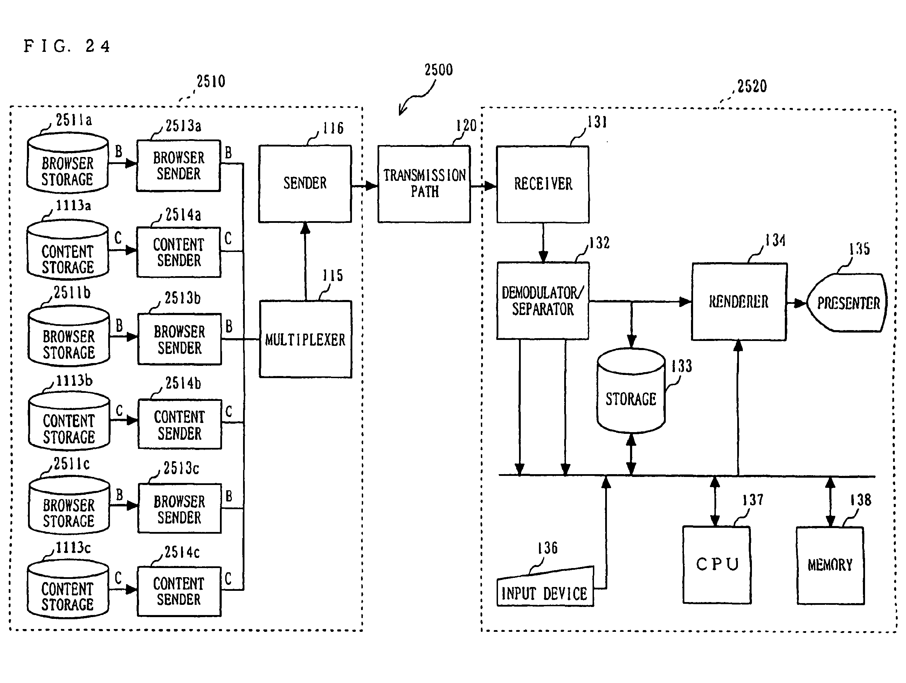

Referring to FIGs. 24, 25, 26, 27, 28, 29, and 30, an exemplary conventional broadcasting system is described. As shown in a block diagram of FIG. 24, a broadcasting system 2500 includes a transmission device 2510, a transmission path 120, and a non-storage type reception device 2520. The transmission device 2510 includes browser storages 2511, browser senders 2513, content storages 1113, content senders 2514, amultiplexer 115, and a sender 116.

A plurality of each of the browser storages 2511, the browser senders 2513, the content storage 1113, and the content senders 2514 are provided, and they are distinguished from each other by assigning a suffix (a lower-case alphabetic character) to their respective symbols. In the following descriptions, if a plurality of elements of the same type are present, they are distinguished from each other similarly by assigning a suffix to their respective symbols. Note that if there is no need to individually distinguish them, they are referred to by their respective generic names without assigning a suffix to their symbols.

In the example shown in FIG. 24, there are provided three of each of the browser storages 2511, i.e., 2511a, 2511b, and 2511c, the browser senders 2513, i.e. , 2513a, 2513b, and 2513c, the content storages 1113, i.e., 1113a, 1113b, and 1113c, and the content senders 2514, i.e. , 2514a, 2514b, and 2514c. Note that if there is no need to individually distinguish them, they are referred to by their respective generic names, such as the browser storages 2511, the browser senders 2513, the content storages 1113, and the content senders 2514.

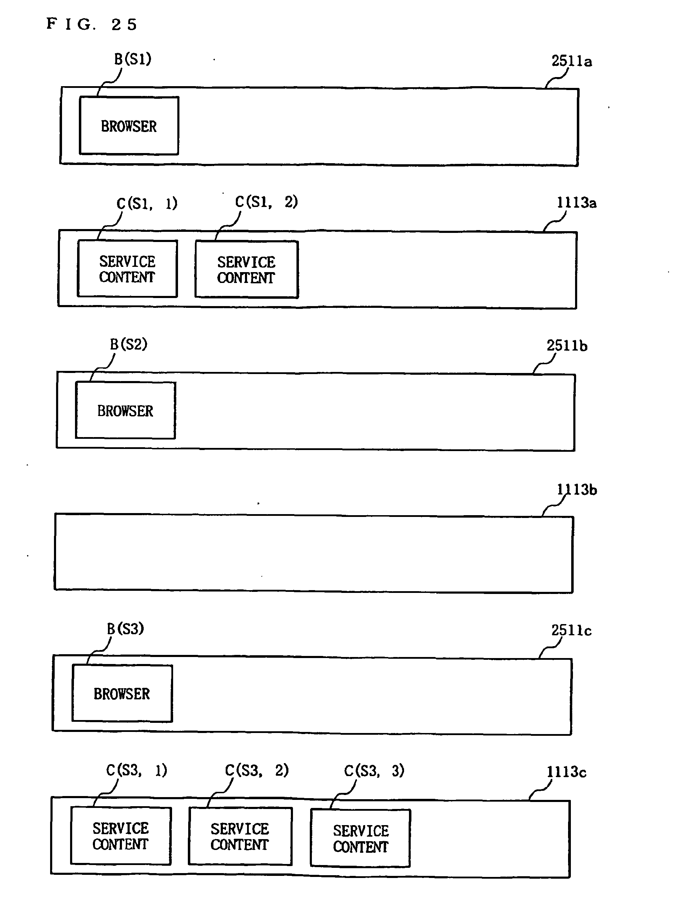

FIGs. 25, 26, 27, and 28 show how data is stored in each element of the above broadcasting system 2500 . The browser storage 2511 individually exists for each service. Three individual browser storages 2511a, 2511b, and 2511c are respectively provided for three services (S1, S2, and S3). The browser senders 2513 store browsers B corresponding to services (S) to be provided to the user, and send the browsers B to the multiplexer 115 according to a predetermined schedule.

The browser sender 2513a corresponding to the service S1 has a browser B(S1) stored therein. The browser B is a computer program written in native code (machine language) of a CPU ( central processing unit) of the non-storage type reception device 2520. Similarly, the browser sender 2513b corresponding to the service S2 has a browser B(S2) stored therein, and the browser sender 2513c corresponding to the service S3 has a browser B(S3) stored therein. Note that the generic name "browser B" is used unless there is no need to distinguish their details.

A specific method for sending a browser, such as a transmission protocol or a transmission schedule, is uniquely defined for each service. Accordingly, the details of processing by the browser senders 2513 vary from one service to another. Therefore, the browser senders 2513a, 2513b, ··· 2513n (where n is an arbitrary natural number) individually exist for their respective services.

In the example shown in FIG. 24, three individual browser senders 2513a, 2513b, and 2513c correspond to three services S1, S2, and S3. The content storage 1113 stores content C belonging to a corresponding service. The content storage 1113 individually exists for each service. Three individual content storages 11, 13a, 1113b, and 1113c are respectively provided for three services.

In the example shown in FIG. 25, the content storage 1113a corresponding to the service S1 has stored therein two service contents C(S1,1) and C(S1,2). The content storage 1113b corresponding to the service S2 has no content C stored therein. The content storage 1113c corresponding to the service S3 has stored therein service contents C(S3,1) C(S3,2), and C(S3,3). Note that the generic name "service content C" is used as above unless there is no need to distinguish their details.

Referring back to FIG. 24, the content sender 2514 uses a predetermined method to send to the multiplexer 115 content C(Sm,O) stored in the content storage 1113 associated with a corresponding service. Note that in content C(Sm,O), Sm is a combination of symbol S representing a service, and a suffix m (an arbitrary natural number) assigned thereto for distinguishing individual services, while O (an arbitrary natural number) indicates the position in a sequence of a plurality of contents C belonging to service Sm.

In the sending device 2510 used in the conventional broadcasting system 2500, a method for sending a browser or content varies from one service to another. Accordingly, it is necessary to provide a plurality of individual browser senders 2513 and a plurality of individual content senders 2514 for their respective services. Further, browser B and content C are different in how they are sent. Accordingly, also for browser B and content C, it is necessary to provide an individual browser sender 2513 and an individual content sender 2514.

The multiplexer 115 multiplexes and modulates a browser B outputted from the browser sender 2513 and service content C(Sm,O) outputted from the content storage 1113 together into a form suitable for sending, and outputs a digital bit stream. The multiplexer 115 may consist of a multiplexing device and a modulation device in a digital broadcast station system.

The sender 116 sends a result of processing by the multiplexer 115 to the transmission path 120. A modem can be used as the sender 116 if the transmission path is a wired communication line. Alternatively, if the transmission path is a broadcasting communications satellite and outer space, a parabolic antenna for sending may be used as the sender 116.

Next, the transmission path 120 is described. The transmission path 120 is a means for transmitting, to the non-storage type reception device 2520, information such as content, a browser, etc. , which is sent from the sending device 2510. For example, the transmission path may be an optical fiber, a cable of any type, a broadcasting communications satellite and outer space, or a package medium such as a DVD and a distribution channel thereof.

Next, the non-storage type broadcasting system is described in detail. The non-storage type reception device 2520 includes a receiver 131, a demodulator/separator 132, a storage 133, a renderer 134, a presenter 135, an input device 136, a CPU 137, and a memory 138.

The receiver 131 receives information such as content C, browser B, etc. , which is sent to transmission path 120, and outputs a digital stream. The receiver 131 may be a modem or a combination of an antenna and a module for an ordinary digital broadcast receiver.

The demodulator/separator 132 demodulates the digital bit stream outputted from the receiver 131, and separates multiplexed information. The demodulator/separator 132 carries out a process opposite to a process carried out by the multiplexer 115 of the sending device 2510. The outputs of the demodulator/separator 132 are supplied to the storage 133 and the renderer 134, and can be read by the CPU 137.

Among the browser and the content outputted from demodulator/separator 132, the storage 133 stores only the browser. This is because the non-storage type reception device 2520 displays, in real-time, the content C sent from the sending device 2510 and thus are not required to store the content C, while the browser B for presenting delivered content C has to always be prepared. The storage 133 is composed of, for example, a randomly accessible storage medium, such as a hard disk. The contents of data stored in the storage 133 can be read and changed by the CPU 137.

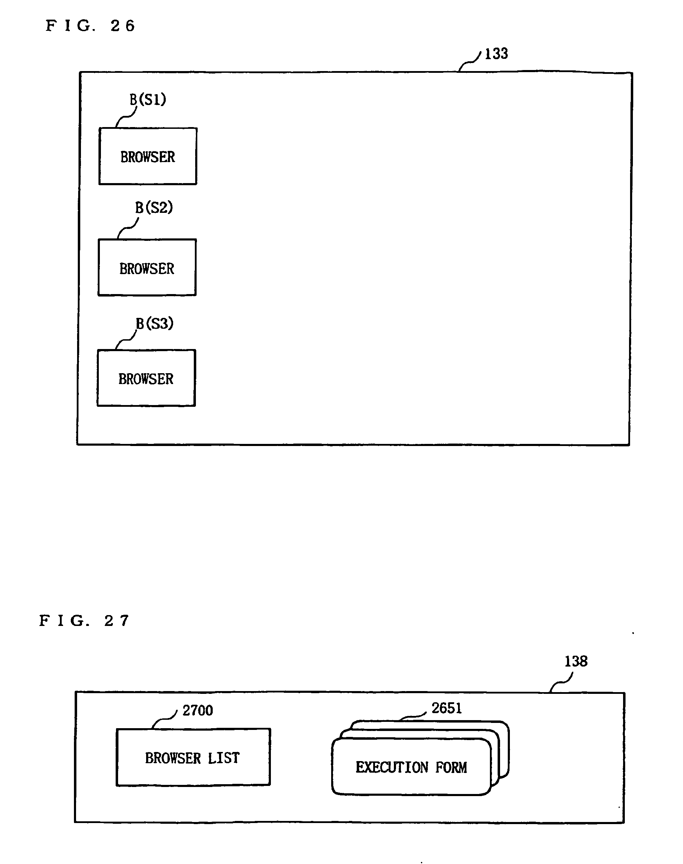

As shown in FIG. 26, the storage 133 has stored therein a total of three browsers B(S1), B(S2) , and B(S3) which are supplied from the demodulator/separator 132. Note that the demodulator/separator 132 may output only the browser B to the storage 133, while the demodulator/separator 132 may output only the content C to the renderer 134.

In response to a request from the CPU 137, the renderer 134 renders OSD (on-screen display) and content, which is inputted from the demodulator/separator 132, into graphics that are to be displayed on the screen.

The presenter 135 presents graphics and/or audio, which are outputted from the renderer 134 , in forms that are viewable/audible to the user. The presenter may be a CRT display, for example.

The input device 136 is a means operated by the user to provide the user's instruction to the non-storage type reception device 2520. As the input device 136, a combination of a remote control and a light reception portion of the remote control, a keyboard, a mouse, or the like can be used.

The CPU 137 is a central processing unit which is interconnected to each element of the non-storage type reception device 2520, and operable to execute a computer program stored in the memory 138 to control the entire non-storage type reception device 2520.

The memory 138 is composed of a RAM/ROM which is a rewritable/non-rewritable semiconductor memory, and used as a region for storing data of processing by the CPU 137 or a computer program or data that is to be executed by the CPU 137. As illustrated in FIG. 27, the memory 138 has stored therein a browser list 2700 and an execution form 2651 which is native code (machine language) of the CPU 137.

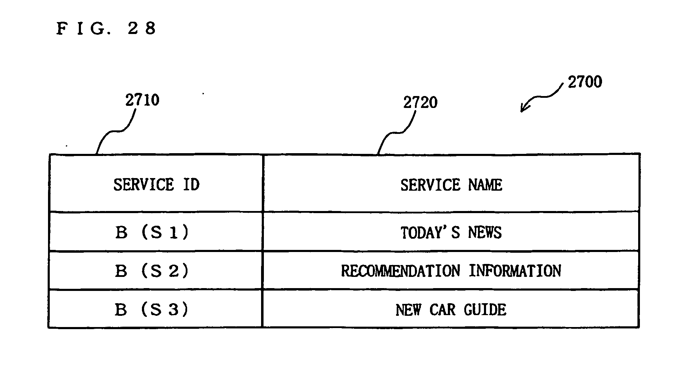

Next, referring to FIG. 28, the browser list 2700 is described. The browser list 2700 is information in the form of a table which has a row for each service and having a column 2710 for browser file names and a column 2720 for service names. The browser list 2700 is used to make it possible to identify a browser used for utilizing a desired service from among information outputted from the demodulator/separator 132.

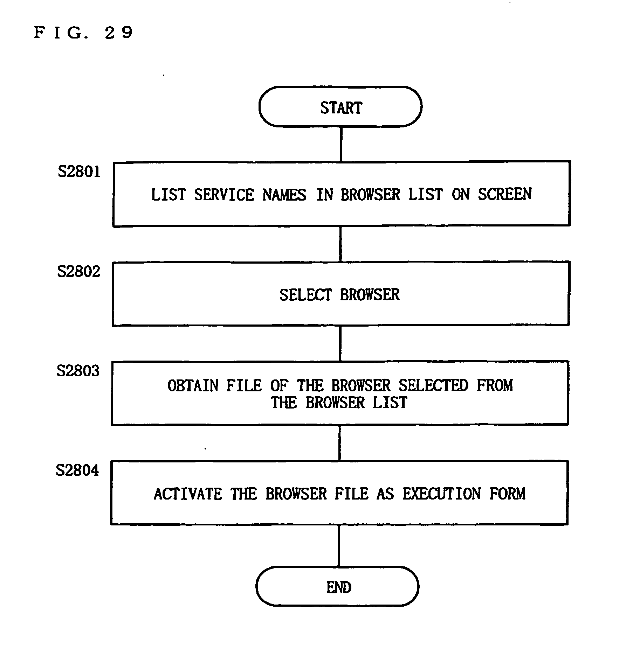

Next, referring to a flowchart shown in FIG. 29, a principle operation of the non-storage type reception device 2520 is described in detail.

At step S2801, service names in the browser list 2700 stored in the memory 138 are listed on the screen. The display onto the screen is carried out by the renderer 134.

At step S2802, it is detected based on the user's operation of the input device 136 that a service has been selected from the list displayed at step S2801.

At step S2803, for the selected service detected at step S2802, the file name column of the browser list 2700 is referenced for browser B to identify the file name B(Sm) of the browser B in the storage 133.

At step S2804, the file B(Sm) identified at step S2803 is executed. The browser is written in the native code of the CPU 137, and therefore can be directly executed by the CPU 137.

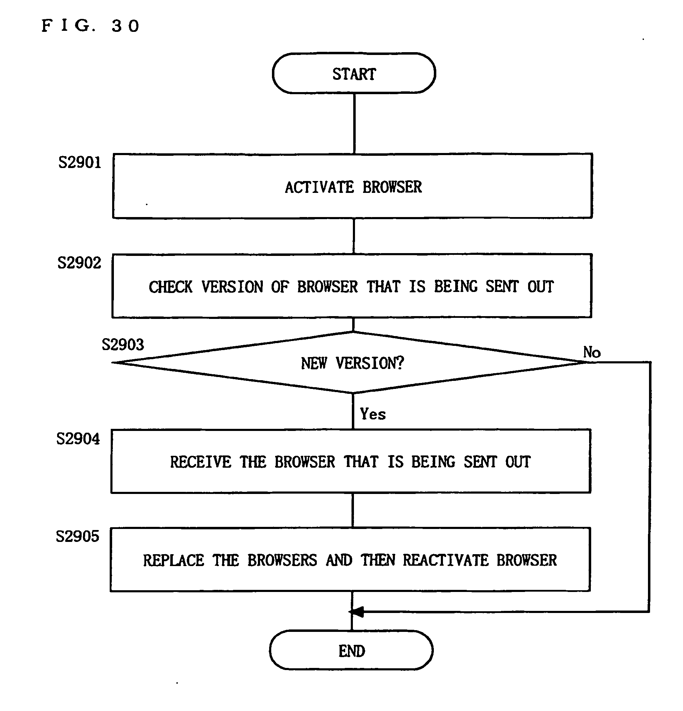

Next, referring to a flowchart shown in FIG. 30, a process performed by the non-storage type reception device 2520 for updating a browser is described.

At step S2901, browser B is activated by the CPU 137.

At step S2902 , the receiver 131 and the demodulator/separator 132 receive browser B that is currently being sent out from the sending device 2510, and check the version thereof.

At step S2903, if it is determined that the browser B received and checked at step S2902 is of a newer version than the browser B that is currently being executed, the procedure proceeds to the next step S2904, and if not, then the procedure is terminated.

At step S2904, the non-storage type reception device 2520 receives the browser B that is being sent out, and the storage 133 temporarily stores the received browser B as a file as illustrated in FIG. 26.

At step S2905 , the browser B that is being executed is replaced with the file that is being temporarily stored. Then, the browser B is reactivated to start executing the received new version of browser.

As a specific method for transmitting a browser which is a computer native code, the above-illustrated conventional broadcasting system uses a unique method which is different for each service. Accordingly, both the sending and reception devices are required to implement an individual method which is different for each browser which varies from one service to another.

That is, in the sending device, it is necessary to provide a different browser sender for each service. Also, in the reception device, the code of a browser of each service itself is typically programmed with a function of receiving a new browser for making a new service available and replacing the browser itself with the received new browser.

As such, in order to realize the same transmission function as that of a browser which essentially carries out the same function for any service, slightly different browsers are required to be implemented.

Accordingly, various wastes arise with an increase in number of services. Specifically, the reception device is required to retain a plurality of similar program codes, and therefore storage capacities are wasted by the number of redundant browsers. Also, the reception device simultaneously activates similar processes, so that computer resources cannot be efficiently utilized.

Also, the method for transmitting a browser varies from one service to another, and the implementation thereof is separately programmed for each browser for each service. It is troublesome that the user is required to previously obtain a browser for a desired service manually by manually activating a file transmission protocol such as FTP.

Also, the method for transmitting a browser differs from the method for transmitting content. Therefore, in the case of subscribing to a plurality of services, transmission of a browser for one service might prevent transmission of a browser or content for another service.

Also, in the sending device, in order to realize browser transmission which is a function that is essentially consistent for any service, slightly different browser senders are required for the number of services. Accordingly, the complexity of the sending device increases linearly with an increase of the number of services. This complexity leads to an increase in development cost and the complexity of management.

Also, there is no association between a plurality of browser senders, therefore there is a possibility that a plurality of browsers might be sent out at the same time more than the transmission path can handle, overflowing the transmission path. Since a content sender individually exists for each service, content transmission might have a problem similar to the problem with the browser transmission.

A non-storage type broadcasting system in accordance with the preamble of claim 1 and a control content transmission method in accordance with the preamble of claim 7 are known from EP-A-0 779 759.

An object of the present invention is to provide a method and system for use in storage-type broadcasting in which a service consisting of a plurality of contents, which are transmitted via digital broadcasting or a computer network, is provided in real-time for viewing, the method and system providing a user interface which implements flexible services while protecting the safety of the services from invalid content.

### DISCLOSURE OF THE INVENTION

The object of the invention is solved by the features of claims 1, 7 and 13. Embodiments of the invention are defined by the features of claims 2 to 6, 8 to 12 and 15 to 17.

### BRIEF DESCRIPTION OF THE DRAWINGS

FIG. 1 is a block diagram showing a structure of a non-storage type broadcasting system according to a first embodiment of the present invention.
FIG. 2 is a diagram for explaining service attribute information stored in a service attribute storage shown in FIG. 1.
FIG. 3 is a schematic diagram showing examples of content bodies stored in a content storage shown in FIG. 1.
FIG. 4 is a table for explaining service attribute information in the non-storage type broadcasting system shown in FIG. 1.
FIG. 5 is a diagram for explaining a service content in the non-storage type broadcasting system shown in FIG. 1.
FIG. 6 is a diagram for explaining a browser content in the non-storage type broadcasting system shown in FIG. 1.
FIG. 7 is a schematic diagram showing examples of contents stored in a storage shown in FIG. 1.
FIG. 8 is a schematic diagram showing information stored in a memory shown in FIG. 1.
FIG. 9 is a flowchart showing an operation of executing a browser content by a non-storage type reception device shown in FIG. 1.
FIG. 10 is a flowchart showing an operation of updating a browser content by the non-storage type reception device shown in FIG. 1.
FIG. 11 is a block diagram showing a structure of a non-storage type broadcasting system according to a second embodiment of the present invention.
FIG. 12 is a table for explaining service attribute information in the non-storage type broadcasting system shown in FIG. 11.
FIG. 13 is a diagram for explaining a browser content in the non-storage type broadcasting system shown in FIG. 11.
FIG. 14 is a flowchart showing an operation of updating a browser content by a non-storage type reception device shown in FIG. 11.
FIG. 15 is a block diagram showing a structure of a non- storage type broadcasting system according to a third embodiment of the present invention.
FIG. 16 is a table for explaining service attribute information in the non-storage type broadcasting system shown in FIG. 15.
FIG. 17 is a diagram for explaining a browser content in the non-storage type broadcasting system shown in FIG. 15.
FIG. 18 is a flowchart showing an operation of updating a browser content by a non-storage type reception device shown in FIG. 15.
FIG. 19 is a block diagram showing a structure of a non-storage type broadcasting system according to a fourth embodiment of the present invention.
FIG. 20 is a table for explaining service attribute information in the non-storage type broadcasting system shown in FIG. 19.
FIG. 21 is a table for explaining a content ID in the non-storage type broadcasting system shown in FIG. 19.
FIG. 22 is a diagram for explaining a browser content in the non-storage type broadcasting system shown in FIG. 19.
FIG. 23 is a flowchart showing an operation of updating a browser content by a non-storage type reception device shown in FIG. 19.
FIG. 24 is a block diagram showing a structure of a conventional non-storage type broadcasting system.
FIG. 25 is a schematic diagram showing examples of contents stored in content and browser storages shown in FIG. 24.
FIG. 26 is a schematic diagram showing an example of a content and browsers stored in a storage shown in FIG. 24.
FIG. 27 is a schematic diagram showing information stored in a memory shown in FIG. 24.
FIG. 28 is a table for explaining service attribute information in the non-storage type broadcasting system shown in FIG. 24.
FIG. 29 is a flowchart showing an operation of executing a browser by a reception device shown in FIG. 24.
FIG. 30 is a flowchart showing an operation of updating a browser by the reception device shown in FIG. 24.

### BEST MODE FOR CARRYING OUT THE INVENTION

### (First Embodiment)

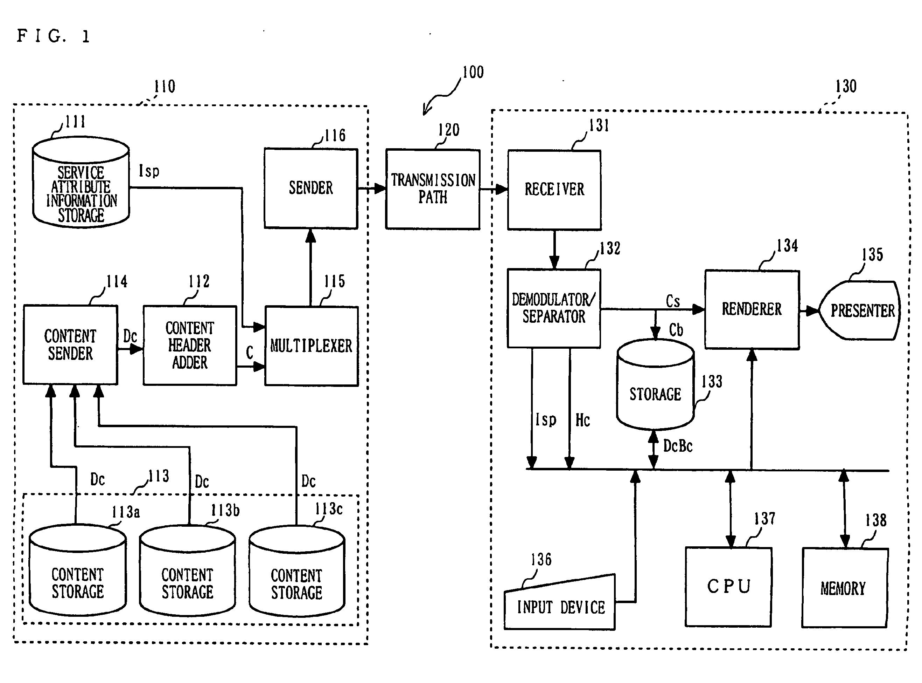

Referring to FIGs. 1, 2, 3, 4, 5, 6, 7, 8, 9, and 10, a non-storage type broadcasting system according to a first embodiment of the present invention is described.

As shown in FIG. 1, a non-storage type broadcasting system 100 according to the first embodiment includes a transmission device 110, a transmission path 120, and a non-storage type reception device 130. As will be described later, the non-storage type reception device 130 stores a browser but does not store content itself, and therefore it is referred to as the non-storage type.

The transmission device 110 includes a service attribute storage 111, a content header adder 112, content storages 113, a content sender 114, a multiplexer 115, and a sender 116. A plurality of content storages 113 are provided, and they are distinguished from each other by assigning a suffix (a lower-case alphabetic character) to their respective symbols. In the following descriptions, if a plurality of elements of the same type are present, they are distinguished from each other similarly by assigning a suffix to their respective symbols. Note that if there is no need to individually distinguish them, they are collectively referred to as the content storages 113, for example.

As described above, if there are a plurality of elements of the same type, they are distinguished herein similarly by adding a suffix to their respective symbols. Further, if there is no need to individually distinguish them, they are referred to by their respective generic names without assigning a suffix to their symbols

Each of the content storages 113 has stored therein a content body Dc which is substantive data of a service. Further, the content storages 113 sequentially supply the content bodies Dc to the content sender 114.

The content sender 114 sends the supplied content bodies Dc to the content header adder 112.

The content header adder 112 adds to the supplied content bodies Dc, a content header Hc consisting of management information of the content bodies Dc including header information, thereby generating content C. The generated content C is supplied to the multiplexer 115.

The multiplexer 115 multiplexes service attribute information Isp supplied from the service attribute storage 111 with content C outputted from the content header adder 112, and supplies it to the sender 116.

The sender 116 modulates the service attribute information Isp modulated with the content C into a digital bit stream in the form adapted to the transmission path, and then transmits it to the transmission path 120. The sender 116 may be a modem if the transmission path is a wired communication line, or may be a parabolic antenna for sending if the transmission path is a broadcasting communications satellite and outer space.

The transmission path 120 is a means for transmitting to the non-storage type reception device 130 information, such as the content C or the browser B, which has been transmitted from the transmission device 110. For example, the transmission path can be composed of an optical fiber, a cable of any type, a broadcasting communications satellite and outer space, or a package medium such as a DVD and a distribution channel thereof.

The non-storage type reception device 130 includes a receiver 131, a demodulator/ separator 132, a storage 133, a renderer 134, a presenter 135, an input device 136, a CPU 137, and a memory 138. Note that the storage 133, the renderer 134, the input device 136, the CPU 137, and the memory 138 are interrelated with each other via a data buss.

The receiver 131 receives information, such as the content C or the browser B, which has been transmitted to the transmission path 120, and outputs a digital stream. The receiver 131 can be composed of a mobile communication module, such as a communication modem, a cable modem, or Bluetooth, and an antenna and tuner module for an ordinary digital broadcast receiver.

The demodulator/separator 132 demodulates the digital bit stream outputted by the receiver 131, and separates multiplexed information into pieces of information. The demodulator/separator 132 performs a process opposite to that of the multiplexer 115 of the transmission device 110. The outputs of the demodulator/separator 132 are supplied to the storage 133 and the renderer 134, and can be read by the CPU 137.

The storage 133 is, for example, a randomly accessible storage medium such as a hard disk, and information thereon can be read and modified by the CPU 137. Among service content C (Sm,O) and browser content C (Sm,Bflg) outputted from the demodulator/separator 132, the storage 133 stores only the browser content C (Sm, Bflg). This is because the non-storage type reception device 130 displays, in real-time, the service content C (Sm,O) transmitted from the transmission device 110 and thus are not required to store the service content C (Sm,O), while the browser content C(Sm, Bflg) containing the browser B for presenting the distributed service content C (Sm,O) has to always be prepared.

The service content C (Sm, O) corresponds to an essence of a service provided by the non-storage type broadcasting system 100, e.g., a program or data which the user enjoys viewing. The browser content C (Sm,Bflg) implements a user interface for allowing the user to actually enjoy a provided service with the non-storage type reception device 130. The browser content C (Sm,Bflg) is a control code executable under a program code execution environment provided by the non-storage type reception device 130, and is intended to process the service content C (Sm,O).

In response to a request from the CPU 137, the renderer 134 renders OSD (on-screen display) and the service content C (Sm,O), which is inputted from the demodulator/separator 132, intographics that are to be displayed on the screen.

The presenter 135 presents outputs of the renderer 134 in forms that are viewable/audible to the user. The presenter may be a CRT display, for example.

The input device 136 is used by the user to provide an instruction for operation to the non-storage type reception device 130. The input device 136 can be composed of a combination of a remote control and a light reception portion of the remote control, a keyboard, a mouse, or the like.

The CPU 137 is a central processing unit which is interconnected to each element of the non-storage type reception device 130, and operable to execute a computer program stored in the memory 138 to control the entire non-storage type reception device 130.

The memory 138 is composed of a RAM/ROM which is a rewritable/non-rewritable semiconductor memory, and used as a region for storing data of processing by the CPU 137 or a computer program or data that is to be executed by the CPU 137.

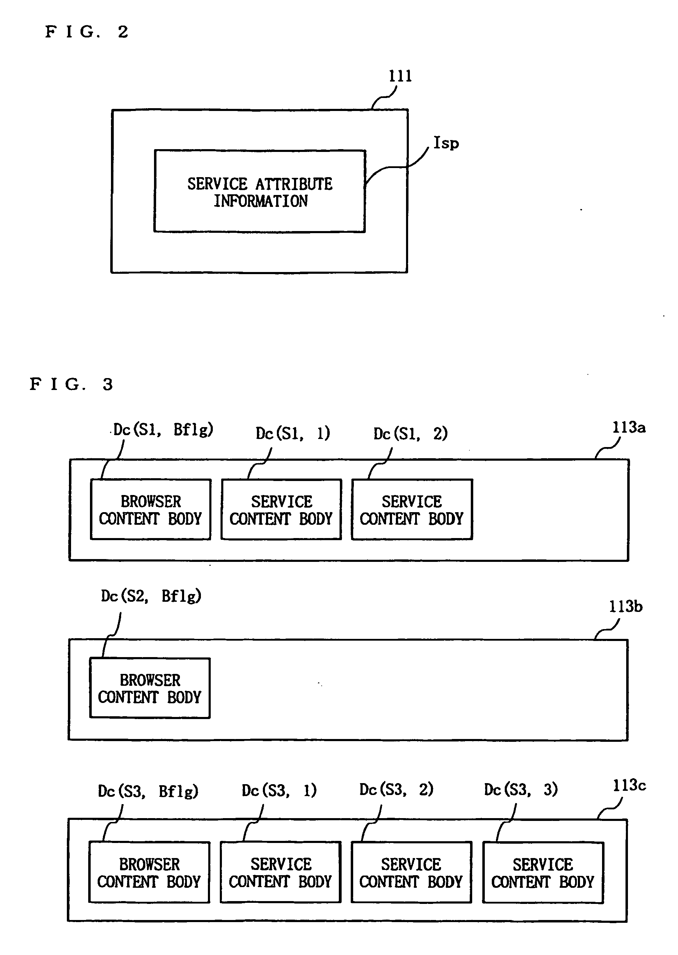

Referring to FIGs. 2, 3, 4, and 5, data stored in each element of the above-described non-storage type broadcasting system 100 is described.

As shown in FIG. 2, the service attribute storage 111 has stored therein service attribute information Isp indicating an attribute of each service provided by the non-storage type broadcasting system 100.

As shown in FIG. 3, the content storage 113 has stored therein a content body Dc which is an essence of the content C which is data constituting a corresponding service. The content storage 113 individually exists for each service. Specifically, there are provided three individual content storages 113a, 113b, and 113c corresponding to three different services.

The content storage 113a corresponding to service S1 has stored therein two content bodies Dc(S1,1) and Dc(S1,2) and one browser content body Dc(S1,Bflg). Note that an arbitrary content body Dc is represented as a content body Dc(Sm,O) by assigning suffix m (an arbitrary natural number) to symbol S, which denotes a service, to identify an individual service, and assigning parameter O (an arbitrary natural number), which indicates the position in a sequence of a plurality of contents C constituting service Sm.

The browser content body Dc(S1,Bflg) is obtained by generating browser B(S1), which is used for service S1, in the same format as that of the content body Dc, and can be represented by the body Dc(Sm,Bflg) in a manner similar to the service content body Dc(Sm,O).

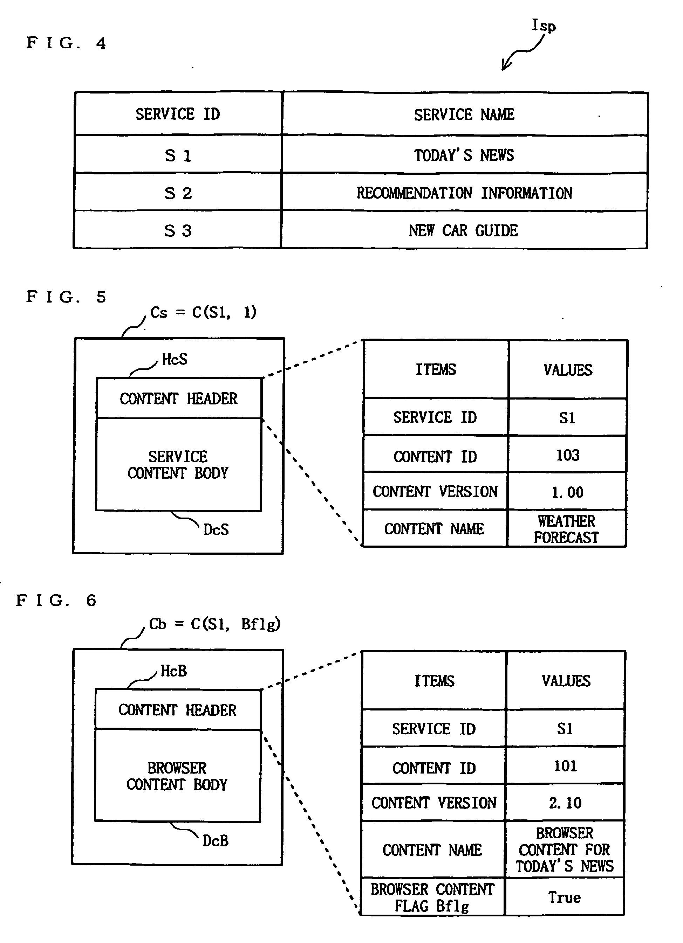

The browser content body Dc(Sm,Bflg) is different in details from the service content body Dc(Sm,O). Specifically, it contains, instead of O, parameter Bflg which indicates service attribute information Isp. Note that the service attribute information Isp will be described in detail later with reference to FIG. 4.

However, the browser content body Dc(Sm,Bflg) is in the same data format as that of the service content body Dc(Sm,O), therefore the content storage 113 cannot distinguish them and handles both of them as the content body Dc. In this context, both the browser content body Dc(Sm,Bflg) and the service content body Dc(Sm,O) are collectively referred to as content body Dc. For simplification, the service content body Dc(Sm,O) and the browser content body Dc(Sm,Bflg) are referred to as service content body DcS and browser content body DcB, respectively, if need arises. Further, the browser content C(Sm,Bflg) containing the browser content body Dc(Sm,Bflg) is simply referred to as browser content Cb, and the service content C(Sm,O) containing the service content body Dc(Sm,O) is simply referred to as service content Cs.

Next, referring to FIGs. 4, 5 and 6, service content Cs and browser content Cb, which are outputted from the content header adder 112, are described in detail. FIG. 4 illustrates by way of example service attribute information Isp stored in the service attribute storage 111. The service attribute information Isp is information related to all services (S1, S2, ...., Sm) provided by the non-storage type broadcasting system 100. In the table, each row corresponds to a service, and contains a service ID and a service name.

For example, the top row shows a service having the service ID "S1" and the service name "TODAY'S NEWS"**.** Similarly, the second row shows a service having the service ID "S2" and the service name "RECOMMENDATION INFORMATION", and the third row shows a service having the service ID "S3" and the service name "NEW CAR GUIDE". The service ID is represented by a unique value in the service attribute information Isp, and can be used for identifying the service.

FIG. 5 schematically shows a data structure of the service content Cs, and FIG. 6 schematically shows a data structure of the browser content Cb. The content C is composed of a content body Dc, which is essential data of the content C it self, and a content header Hc, which is metadata associated with the content body Dc.

In FIG. 5, a service content body DcS of content C(S1,1), which is the service content Cs, is associated with a content header HcS. In FIG. 6, a browser content body DcBn of C(S1,Bflg), which is the browser content Cb, is associated with a content header HcB.

The content headers Hc (i.e., HcS and HcB) are represented in the form of a table in which a row consists of a set of an item and a value. The content header HcS of the service content Cs (i.e., C(S1,1)) includes four rows, i.e., SERVICE ID, CONTENT ID, CONTENT VERSION, and CONTENT NAME.

The service ID corresponds to a service ID in the service attribute information Isp illustrated in FIG. 4, and identifies to which service S the content C corresponds. In present example, the service ID is S1, and therefore it is indicated that the content C is the "TODAY'S NEWS" service shown in FIG. 4.

The content ID is used for identifying the content C itself. Accordingly, the content ID is managed, for example, so as to avoid overlaps on the sending side, and has a unique value at least in the non-storage type broadcasting system 100.

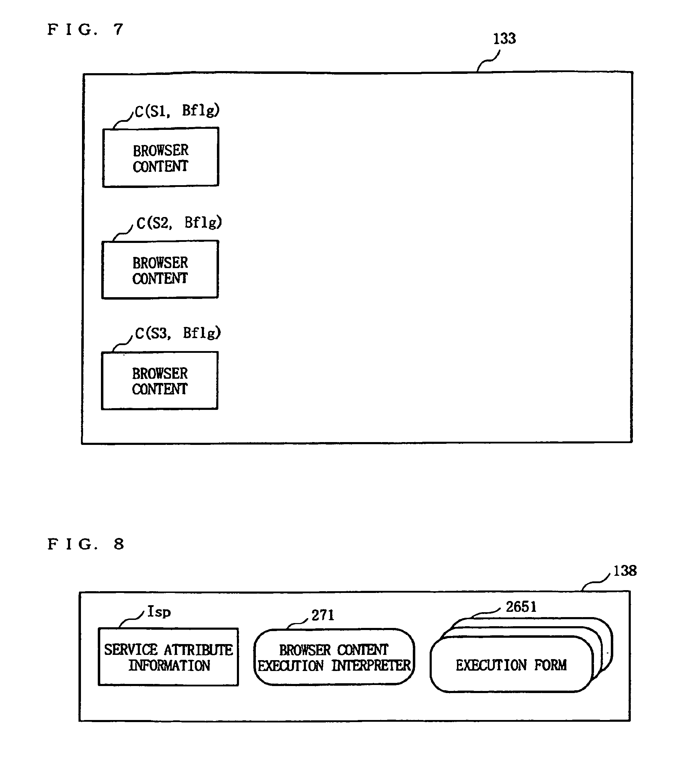

The content version indicates whether the content C is old or new. The content version has an individual value for each content ID. If it is desired to replace a current content Cc, which is currently stored in the storage 133 that is to be described in detail later with reference to FIG. 7, with a new content Cn to which it is desired to be updated, a content version having a value greater than that of the current content Cc is assigned to the new content Cn when the content C is sent out.

The content name is an item to be read as a character string when the user selects the content. In the present example, it is indicated that the content body Dc is the "WEATHER FORECAST".

The above-described serviceID, content ID, content version, and content name are commonly contained in the service content header HcS and the browser content header HcB.

However, as shown in FIG. 6, the browser content header HcB of the browser content Cb further contains a browser content flag row.

The browser content flag Bflg is an item for indicating that the content C is the browser content Cb, and corresponds to the above-described parameter Bflg. The browser content flag of the browser content header HcB is indicated as "True", therefore it is indicated that the content body Dc is the browser content body DcB.

In the browser content Cb illustrated in FIG. 6, the service ID is S1 and the content ID is 101. Therefore, it is indicated that the browser content Cb for the service "TODAY'S NEWS" contains the content body Dc having the content ID "101". Thus, three of the service ID, the content ID, and the browser content flag are information at least required for defining that the content C is the browser content Cb.

Hereinbelow, processes which the service attribute storage 111, the content header adder 112, the content storage 113, and the content sender 114 perform based on the above-described data structure of the content C are described.

The content sender 114 sends to the content header adder 112 content bodies Dc sequentially supplied by the content storage 113. The content header adder 112 assigns a content header Hc (HcS, HcB) to a content body Dc (i.e., DcS, DcB) to generate content C (i.e., Cs, Cb), and supplies it to the multiplexer 115.

The following description is given by referring to FIGs. 7 and 8 with respect to what type of data is stored in each element of the non-storage type reception device 130 when content C (service content Cs, browser content Cb) is transmitted from the transmission device 110 via the transmission path 120.

A digital bit stream transmitted from the transmission device 110 via the transmission path 120 and containing the content C and the service attribute information Isp is first received by the receiver 131 of the non-storage type reception device 130, and then supplied to the demodulator/separator 132.

The demodulator/separator 132 demodulates the digital bit stream, and separates and reproduces the content C and the service attribute information Isp which are contained in the demodulated digital bit stream. Further, the demodulator/separator 132 extracts a content header Hc from the reproduced content C, and outputs it to a bus together with the service attribute information Isp.

The reproduced content C is temporarily retained in the demodulator/separator 132. Note that where it is necessary to distinguish the reproduced content C from content C having been previously stored in the storage 133, the content C retained in the demodulator/separator 132 is referred to as "demodulated content Cn" and the content C stored in the storage 133 is referred to as "stored content Ca".

The content C reproduced by the demodulator/separator 132 is supplied at a predetermined time and stored into the storage 133. As shown in FIG. 7, among contents C (i.e., Cs, Cb) of services outputted from the content header adder 112 to the multiplexer 115, only the browser content Cb is stored in the storage 133. Specifically, as described with reference to FIG. 7, only the browser content Cb is stored as the stored content Ca stored in the storage 133.

That is, among contents C(S1,Bflg), C(S1,1), C(S1,2), C(S2, Bflg), C(S3,Bflg), C(S3,1), C(S3,2), and C(S3,3) which respectively correspond to a total number of eight content bodies Dc(S1,Bflg), Dc(S1,1), Dc(S1,2), Dc(S2, Bflg), Dc(S3,Bflg), Dc(S3,1), Dc(S3,2), and Dc(S3,3), which are stored in the content storages 113a, 113b, and 113c shown in FIG. 3, the contents C(S1,Bflg), C(S2,Bflg), and C(S3,Bflg) are stored in the storage 133.

Further, the storage 133 is controlled by the CPU 137 so as to output the browser content body Dc(S,Bflg) , which is contained in the stored browser content Cb, to a bus or the renderer 134.

The renderer 134 generates, based on the supplied information, a video signal for rendering an image on the presenter 135.

As shown in FIG. 8, the memory 138 has stored therein the service attribute information Isp, a browser content execution interpreter 271, and an execution form 2651 which is a native code of the CPU 137. The browser content execution interpreter 271 is used for executing content as a computer high-level language program.

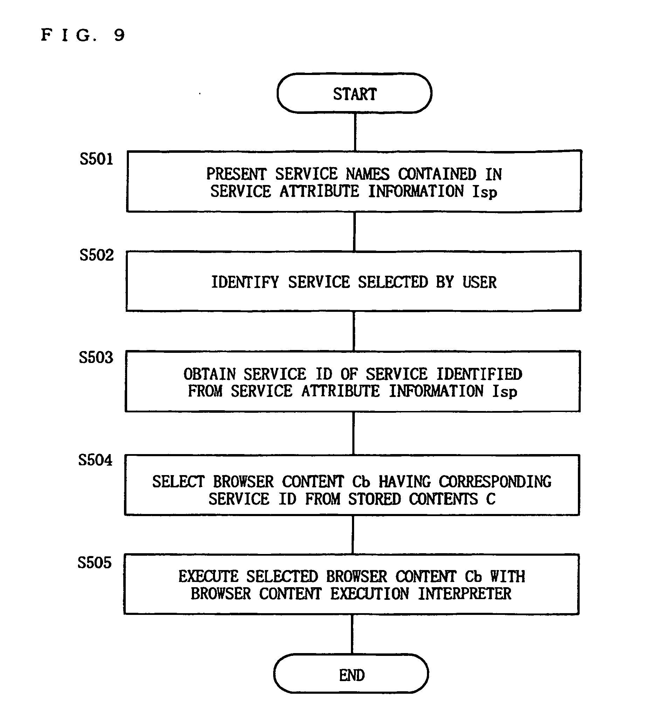

Next, referring to a flowchart shown in FIG. 9, an operation of activating the browser content Cb contained in the content C received by the non-storage type reception device 130 is described.

At step S501, a list of service names of services described by the service attribute information Isp outputted from the demodulator/ separator 132 is displayed on the screen of the presenter 135.

At step S502, a service selected from the list of service names displayed at step S501 is detected based on the user's operation of the input device 136. Specifically, the service selected by the user is identified based on the user's operation of the input device 136 and the list of service names.

At step S503, a service ID corresponding to the service identified at step S502 is obtained from the service attribute information Isp.

At step S504, all contents C stored in the storage 133 are searched through in order to select a content Cb having the service ID obtained at step S503 and a content header HcB with a browser content flag Bflg indicated as "True".

At step S505, the browser content Cb selected at step S504 is executed by the browser content execution interpreter 271.

In this manner, SINCE the browser content flag Bflg is contained in the content header HcB of the browser content Cb, the browser content Cb can be distinguished from other ordinary service contents Cs. Also, by designating an individual service S, a browser content Cb corresponding thereto (i.e., C(Sm,Bflg)) can be activated as a browser.

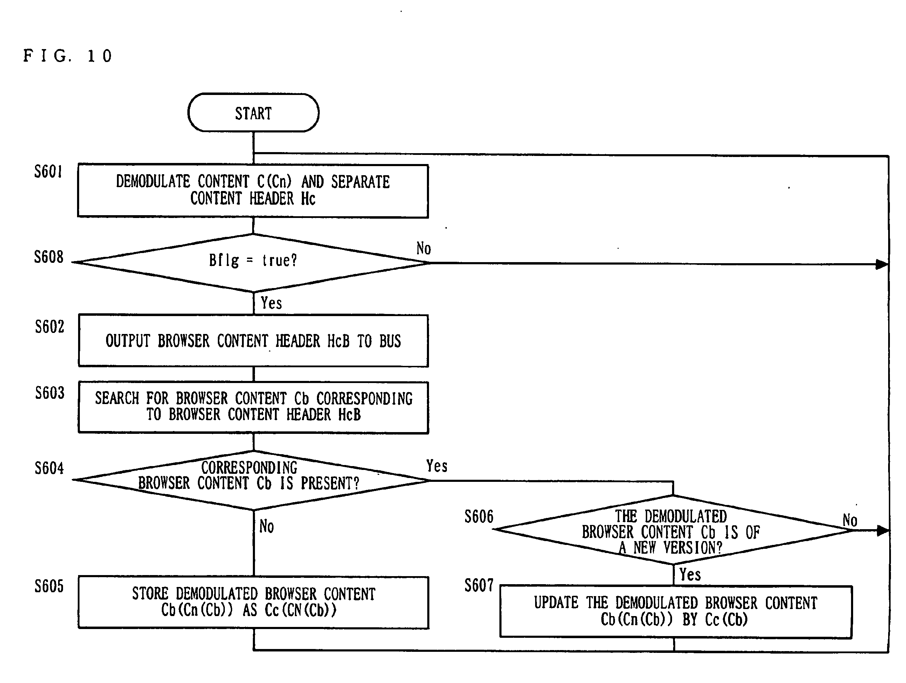

Next, referring to a flowchart shown in FIG. 10, an operation performed by the non-storage type reception device 130 for updating the browser content Cb is described.

At step S601, the demodulator/separator 132 reproduces the content Cn (i.e., Cb, Cs) , the service attribute information Isp, and the content header Hc (i.e., HcB, HcS).

At step S608 , it is determined whether the browser content flag Bflg of the newly separated content Cn is "True". If it is "False" , the procedure returns to the above step S601. Note that if there is no browser content flag Bflg, i.e., in the case of the service content Cs, it is determined at this step as being false. If the browser content flag Bflg is true, i.e., in the case where the new content Cn is the browser content Cb, the procedure proceeds to the next step S602.

At step S602, the content header Hc separated at step S601 is outputted to a bus. Specifically, only the browser content header HcB of the browser content Cb is outputted.

At step S603, the storage 133 is searched through to select a new content Cc (browser content Cb) corresponding to the separated content header Hc. Specifically, the current content Cc (browser content Cb) having the same service ID as that written in the separated content header Hc is selected from among all browser contents Cb stored in the storage 133.

At step S604, if it is determined that the storage 133 includes no browser content Cb having the same content ID, the procedure proceeds to the next step S605.

At step S605, a new browser content Cn (Cb) to which none in the storage 133 corresponds is stored anew as the current browser content Cc (Cb). Then, the procedure returns to the above step S601.

On the other hand, at step S604, if it is determined based on a search result of step S602 that the storage 133 contains a browser content Cb (current content Cc) having the same content ID, the procedure proceeds to step S606.

At step S606, whether the new browser content Cn (Cb) separated at step S601 is newer than the current browser content Cn (Cb) stored in the storage 133 is determined based on a content version contained in the browser content header HcB outputted at step S602. If it is determined as being new, the procedure proceeds to the next step S607.

At step S607, the current browser content Cn (Cb) stored in the storage 133 is updated by the new browser content Cn (Cb) retained in the demodulator/separator 132. Note that at this point, the new browser content Cn (Cb) becomes a current browser content Cc. Then, the procedure returns to step S601.

On the other hand, at step S606, if it is determined that the newly demodulated browser content Cn (Cb) is not newer than the current new browser content Cc (Cb) stored in the storage 133, the above step S607 of updating the current browser content Cn (Cb) is skipped, and the procedure returns to step S601.

As described above, in the non-storage type broadcasting system 100, the transmission device 110 sends the browser content Cb, which provides a user interface to each service Sm, as part or whole of content C constituting the service Sm. Then, the non-storage type reception device 130 receives the sent content C, and activates the browser content Cb contained in the received content C, thereby executing the user interface. Note that the procedure shown in FIG. 10 may be executed as part of step S504 of the flowchart shown in FIG. 9, or may be executed only when it is necessary to update the browser content Cb.

Then, the browser content Cb is automatically updated or retained at a time point when the one of a version newer than that stored in the non-storage type reception device 130 is distributed, or when the one of any version other than those retained in the non-storage type reception device 130 is distributed. Specifically, the process of updating the content C is carried out only when the content C is the browser content Cb. This mechanism is not a function for each specific service, but is a function unique to the entire non-storage type reception device 130 and common to all services. Accordingly, by merely realizing the function of updating the browser content Cb, it is possible not only to process service contents Cs for all the services in real-time but also to update and store the browser, i.e., the browser content Cb.

In other words, in the present embodiment, by transmitting the browser content Cb, which is a user interface for each service, as part of content, it is made possible to eliminate of the need of preparing a special mechanism for transmitting a user interface for each service and to update the user interface as if content is updated.

### (Second Embodiment)

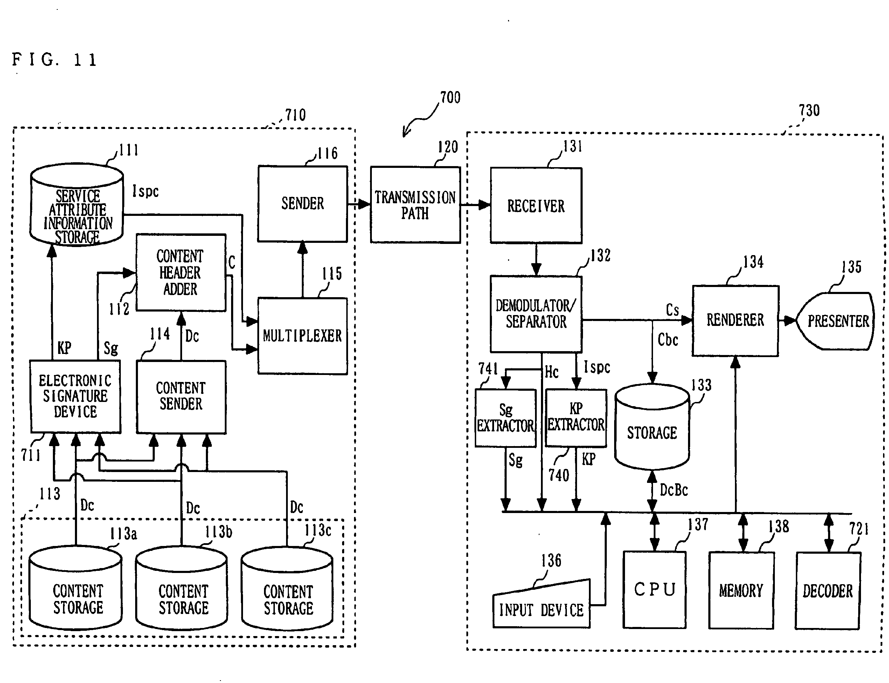

Hereinbelow, referring to FIGs. 11, 12, 13, and 14, a non-storage type broadcasting system according to a second embodiment of the present invention is described. As shown in FIG. 11, similar to the non-storage type broadcasting system 100 as shown in FIG. 1, a non-storage type broadcasting system 700 according to the present embodiment includes a transmission device 710, a transmission path 120, and a non-storage type reception device 730.

The transmission device 710 is such that the transmission device 110 of the non-storage type broadcasting system 100 additionally includes an electronic signature device 711. The non-storage type reception device 730 is such that the non-storage type reception device 130 additionally includes a KP extractor 740, an Sg extractor 741, and a decoder 721. Hereinbelow, features specific to the non-storage type broadcasting system 700 are mainly described, and the descriptions of features common to the non-storage type broadcasting system 100 are omitted.

The digital signature device 711 manages electronic signature keys, and applies an electronic signature (digital signature) to browser content Cb. As an electronic signature, a technique for public key cryptography is used. In this technique, a set of a secret key and a public key are generated for a distributor of information, and while only the public key is distributed to users of the information, the secret key is kept in secret. The distributor uses the secret key to apply an electronic signature to information that is desired to be distributed (the information to which the electronic signature has been applied is provided in the form of a combination of original information and the electronic signature). The information to which the electronic signature is applied and which is received by the user and the distributor's public key are used to make it possible to authenticate that the distributor having the secret key has applied the electronic signature to that information.

The electronic signature device 711 has a combination of a secret key and a public key for each service. The electronic signature device 711 uses the secret key of the service to apply an electronic signature to the browser content Cb of the service. Specifically, the electronic signature device 711 is connected to the content storage 113 and outputs, in accordance with services of the content bodies Dc respectively supplied from the content storages 113a, 113b, and 113c, public keys KP different among the services to the service attribute storage 111.

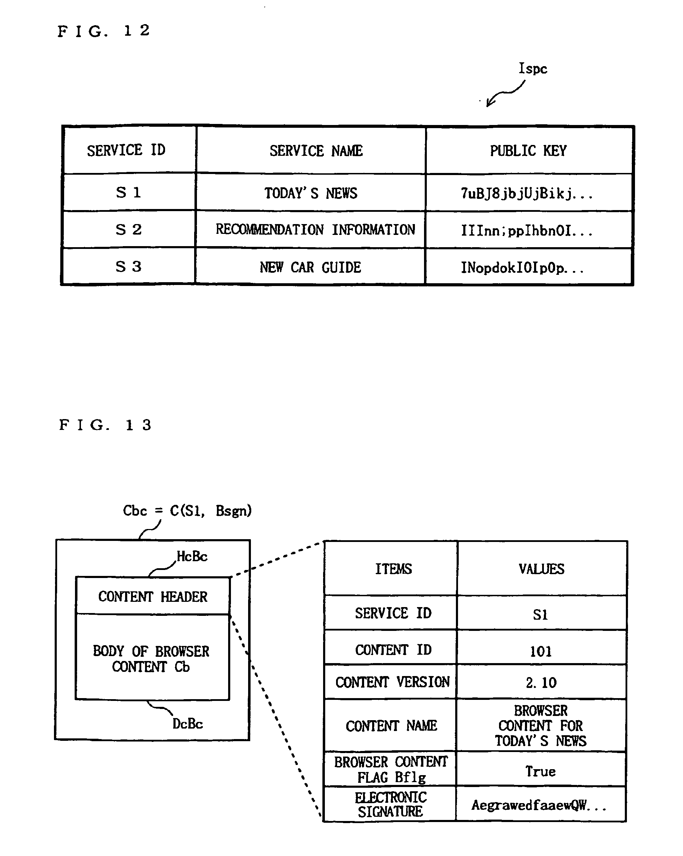

Specifically, as shown in FIG. 13, by adding the item of ELECTRONIC SIGNATURE to the content header HcB of the browser content Cb, the electronic signature is contained in the browser content Cb. Accordingly, unlike the browser content Cb, browser content Cbc (S1,Bsgn) has a content header with an electronic signature row. A value column of the electronic signature row contains information (electronic signature) about a result of applying an electronic signature to a corresponding content body Dc with a secret key of service S1 to which the content belongs.

The content header HcB assigned with the electronic signature is specified as content header HcBc. Further, in order to distinguish a browser content with an electronic signature item from other browser contents Cb, that browser content is referred to as browser content Cbc, and represented by C(Sm,Bsgn).

The service attribute storage 111 generates service attribute information Ispc including a public key KP, and outputs it to the multiplexer 115. FIG. 12 shows the structure of the generated service attribute information Ispc. The service attribute information Ispc has a column for storing public keys KP. The public keys stored correspond to three services S1, S2, and S3.

Further, the electronic signature device 711 generates electronic signature Sg, and outputs it to the content header adder 112. The content header adder 112 generates a browser content Cbc with a signature based on the content body Dc supplied from the content sender 114 and the electronic signature Sg supplied from the electronic signature device 711, and outputs, to the multiplexer 115, content C consisting of the browser content Cbc with a signature and a service content Cs.

The non-storage type reception device 730 reproduces the content C (Cs and Cbc), content headers Hc (HcS,HcBc), and the service attribute information Ispc from a digital bit stream received by the demodulator/separator 132. The content C (Cs and Cbc) is retained in the demodulator/separator 132, the content headers Hc (HcS and HcBc) are outputted to abus and the Sg extractor 741, and the service attribute information Ispc is outputted to the KP extractor 740.

The Sg extractor 741 extracts the electronic signature Sg from the content header Hc of the browser content C (Sm,Bflg) among the supplied content headers Hc, and outputs it to the bus.

The KP extractor 740 extracts the public key KP from the service attribute information Ispc, and outputs it to the bus.

The decoder 721 authenticates an electronic signature in the content header HcBc based on the public key KP supplied via the bus.

As described above, the non-storage type reception device 730 is able to authenticate the correctness of the received browser content Cbc based on the electronic signature Sg of the browser content Cbc and the public key KP in the service attribute information Ispc. Thus, a content creator of each service is able to ensure that the browser content Cbc is encrypted with a secret key unique to the service.

Next, an operation of the non-storage type reception device 730 according to the second embodiment is described. The operation of the non-storage type reception device 730 for activating the browser content Cb contained in the received content C is basically the same as that of the non-storage type reception device 130 according to the first embodiment described with reference to the flowchart shown in FIG. 9, except that the service attribute information Isp is changed to Ispc and the target content C is changed to the browser content Cbc. Accordingly, the description of the operation is omitted.

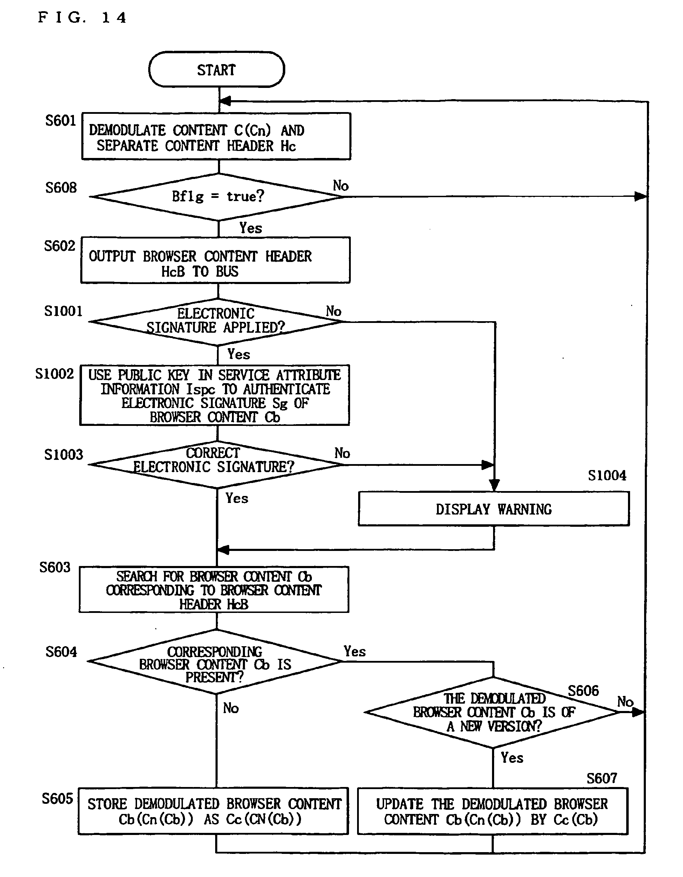

Now, referring to a flowchart shown in FIG. 14, an operation performed by the non-storage type reception device 730 for updating the browser content Cb is described. The operation performed by the non-storage type reception device 730 for updating the browser content Cb is similar to the operation performed by the non-storage type reception device 130 for updating the browser content Cb as described with reference to FIG. 10. Specifically, in the flowchart shown in FIG. 14, steps S1001, S1002, S1003, and S1004 are additionally provided between steps S602 and S603 in the flowchart shown in FIG. 10.

That is, as described above, after the processes of steps S601 and S602, the browser content Cb is targeted for processing, and the procedure proceeds to the additionally provided step S1001.

At step S1001, an obtained browser content Cbc is referenced for the row of the electronic signature stored in the content header HcB. If there is any electronic signature item, the procedure proceeds to step S1002.

At step S1002, it is authenticated whether the electronic signature Sg of the browser content Cbc has been applied with a secret key corresponding to a public key KP of a corresponding service. The public key KP used therefor is the one obtained by selecting the row of that corresponding service from the service attribute information Ispc. The procedure proceeds to the next step S1003.

If it is determined at step S1003 based on a result of the authentication at step S1002 that the electronic signature Sg is not correct, the procedure proceeds to step S1004.

At step S1004, a warning that the browser content Cbc with a signature is invalid is displayed, and the procedure is terminated. Accordingly, in any cases where it is determined that there is any abnormality in the electronic signature (No at step S1001 or S1003), the warning is issued at this step, and then the procedure proceeds to the above-described step S603.

In contrast, if it is determined at step S1003 that the electronic signature is correct, the above-described step S1004 is skipped, and the procedure proceeds to steps S604, S605, S606, and S607, as in the case of the first embodiment.

As described above, in the non-storage type broadcasting system 700 according to the present embodiment, as in the non-storage type broadcasting system 100, a sent content C is received, and a user interface is executed by activating a browser content Cb contained in the received content C. However, the non-storage type broadcasting system 700 employs an electronic signature technique so that only the one in possession of the secret key of a target service is able to send a browser content Cb executable in the non-storage type reception device 730.

Thus, even if the one who is out of possession of the secret key for the target service attempts to store whatever content into the content storage, it is possible to prohibit intentionally transmitting an erroneous browser content Cb to execute it in the non-storage type reception device 730. Also, it is possible to prohibit a browser content Cb to which an electronic signature is applied with a secret key of a service other than the target service from being executed as the browser content Cb of the target service.

Note that although the electronic signature is applied only to the content body for the reason of simplifying the mechanism, the content header may be contained in the content body such that the electronic signature is applied thereto.

Note that a simple electronic signature method which does not use public key encryption may be used. For example, a secret key may be generated for each service, and the secret key may be stored in the reception device by any method. Information which provides an indication of the browser content Cb may be encrypted with the secret key for each service, and the information may be decrypted on the reception device side to determine that it is the browser content Cb.

As described above, in the present embodiment, it is possible to ensure the reliability of content C distributed in the non-storage type broadcasting system 700 since the system includes: the electronic signature device 711, which applies an electronic signature to the browser content Cbc, which is content for providing a user interface for each service; the content storage 113 which sends the content body Dc containing browser content body DCbc; the service attribute storage 111 which sends the public key KP of the electronic signature Sg as the service attribute information Ispc common to all the services; and the non-storage type reception device 730 which authenticates the electronic signature Sg to determines that the content C is the browser content Cbc.

That is, in the present embodiment, the electronic signature is used for a mechanism of designating the browser content Cb from among a plurality of contents C belonging to one service, and a key used for the electronic signature is prepared for each service provider, so that no one but the provider can designate the browser content Cb for that service. As a result, it is possible to prevent the browser content Cb from being incorrectly designated by the one other than the service provider who has malicious intent.

### (Third Embodiment)

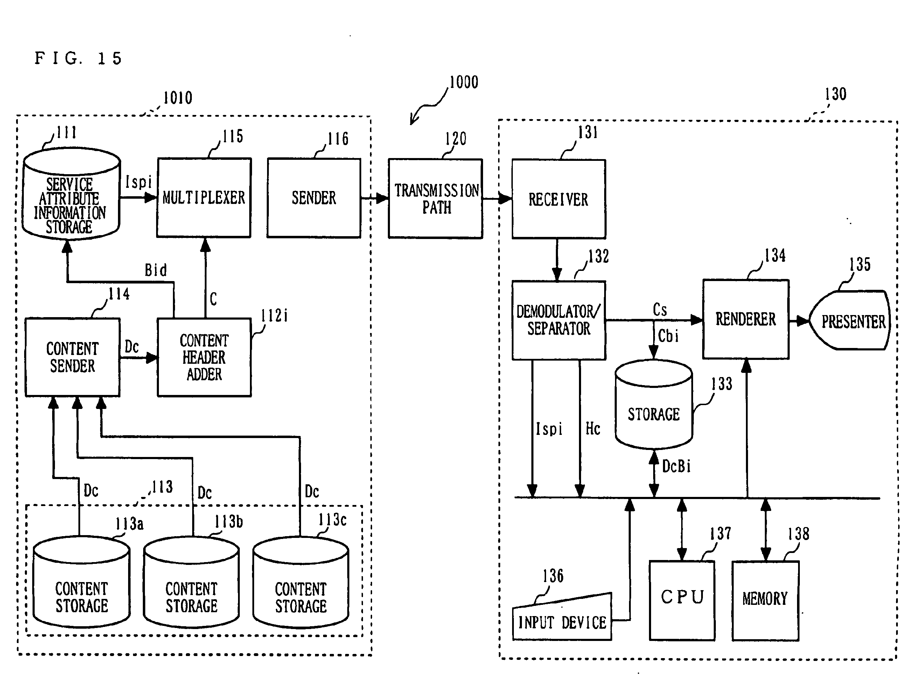

Next, referring to FIGs. 15, 16, 17, and 18, a non-storage type broadcasting system according to a third embodiment of the present invention is described. As shown in FIG. 15, similar to the non-storage type broadcasting system 100 shown in FIG. 1, a non-storage type broadcasting system 1000 according to the present embodiment includes a transmission device 1010, a transmission path 120, and a non-storage type reception device 130. The transmission device 1010 is such that the content header adder 112 of the transmission device 110 in the non-storage type broadcasting system 100 is replaced with a content header adder 112i. Hereinbelow, features specific to the non-storage type broadcasting system 1000 are mainly described, and the descriptions of features common to the non-storage type broadcasting system 100 are omitted.

In addition to the functions of the content header adder 112, the content header adder 112i has the following functions. Specifically, for a plurality of content bodies Dc stored in the content storages 113a, 113b, and 113c, browser contents Cbi are designated, and content IDs and content versions of the designated contents (browser contents Cbi) are extracted as browser identification information Bid. Then, the content header adder 112i outputs the extracted browser identification information Bid to the service attribute storage 111.

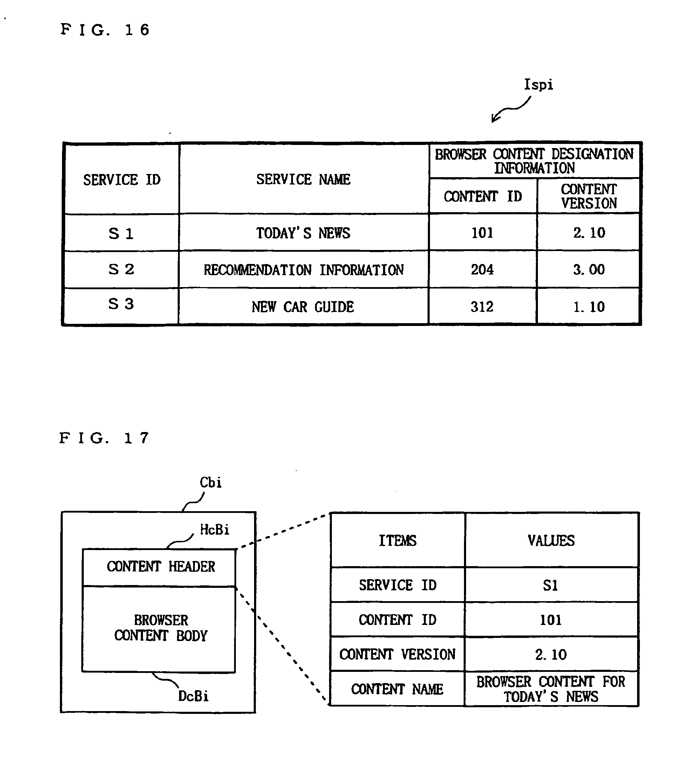

As shown in FIG. 16, the service attribute storage 111 writes the content IDs and content versions of the browser contents Cb into the service attribute information Isp based on the browser identification information Bid. Specifically, the service attribute information Ispi has a browser content designation information column consisting of a column indicating the content IDs and a column indicating content versions.

The browser content designation information is designated for each service, thereby making it possible to identify a browser content Cb(Cbi) among contents. In this manner, the service attribute information Isp in which the content ID and content version of the browser content Cbi are written is identified as the service attribute information Ispi.

The designation of the browser content Cbi is not performed based on the browser content flag of the content header HcBi, but it is performed by the content header adder 112i selecting the content.

FIG. 17 shows an exemplary content header HcBi. Since the designation of the browser content Cbi is not performed based on the browser content flag Bflg, the content header Hcbi does not have a row for the browser content flag Bflg . On the content header, it is not possible to distinguish between service content Cs and browser content Cb. In the present embodiment, although it seems that the browser content Cb is recognizable based on the row of the content name because a human being recognizes the meaning of a character string by reading it, it is not recognizable on the level of the transmission device 1010 and the non-storage type reception device 130.

Next, an operation of the non-storage type reception device 130 according to the present embodiment is described. The operation of the non-storage type reception device 730 for activating the browser content Cb contained in a received content C is basically the same as that of the non-storage type reception device 130 according to the first embodiment described with reference to the flowchart shown in FIG. 9, except that the service attribute information Isp is changed to Ispc and the target content C is changed to the browser content Cbc. Accordingly, the description of the operation is omitted.

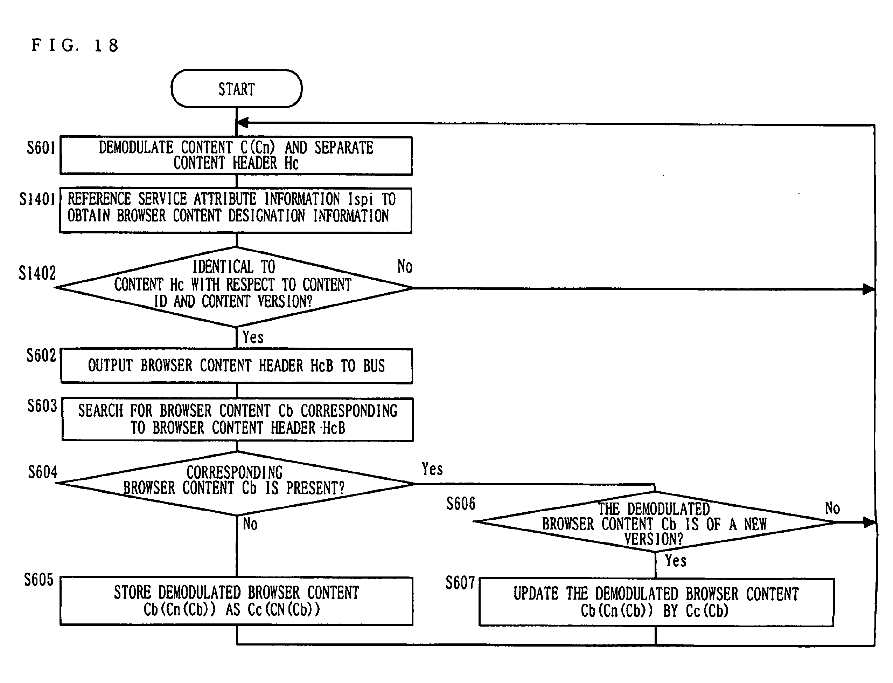

As described above, in the non-storage type broadcasting system 1000, the non-storage type reception device 130 is configured in the same manner as that of the non-storage type broadcasting system 100, but there are slight differences in operation because program codes and data that are to be stored are different. Now, referring to a flowchart shown in FIG. 18, an operation of updating browser content Cb by the non-storage type reception device 130 according to the present embodiment is described. As shown in FIG. 18, in the operation of updating the browser content Cb in accordance with the present embodiment, step S608 of the flowchart shown in FIG. 10 is replaced by steps S1401 and S1402.

Specifically, at step S1401, for a service selected by the user (S502, S503), the service attribute information Ispi is referenced to retrieve browser content designation information based on the content C (i.e., Cn) demodulated and the content header Hc separated at step S601.

At step S1402, the storage 133 is searched through to select content C (browser content Cbi) in possession of the content ID and content version of the browser content designation information retrieved at step S1401. Then, the selected content C is determined as the browser content Cbi, and thereafter the procedure proceeds to the above-described step S604. On the other hand, as a result of the search, if no corresponding content C (browser content Cbi) is selected, the procedure proceeds to step S601.

The designation of the browser content Cbi is performed by the content header adder 112i. Accordingly, by appropriately managing the content header adder 112i, it is possible to prevent the browser content Cbi from being repeatedly designated or to prevent a content C for a different service from being erroneously designated as the browser content Cbi.

As described above, in the present embodiment, it is possible to realize the non-storage type broadcasting system 100 which ensures that the browser content Cbi is distinguished from the service content Cs by providing the system with the content sender 114 for sending a content body constituting each service; the service attribute storage 111 which sends the service attribute information Ispi containing, as browser content designation information common to all services, the browser identification information Bid for designating the browser content body DCb from a plurality of content bodies; and the non-storage type reception device 130 which determines whether content C is the browser content Cbi, based on the browser content designation information.

Specifically, in the present embodiment, the browser content Cbi is designated based on control content designation information common to a plurality of services, and the browser content designation information is provided independently of content and content headers. Thus, it is possible to prevent the browser content Cb from being incorrectly designated for a different service regardless of contents of the content storage. For example, if the operation is such that the browser content Cb designation information is managed under a contract broadcaster, rather than under each service provider, it is possible to prevent the browser content Cb from being incorrectly designated by a plurality of service providers.

### (Fourth Embodiment)

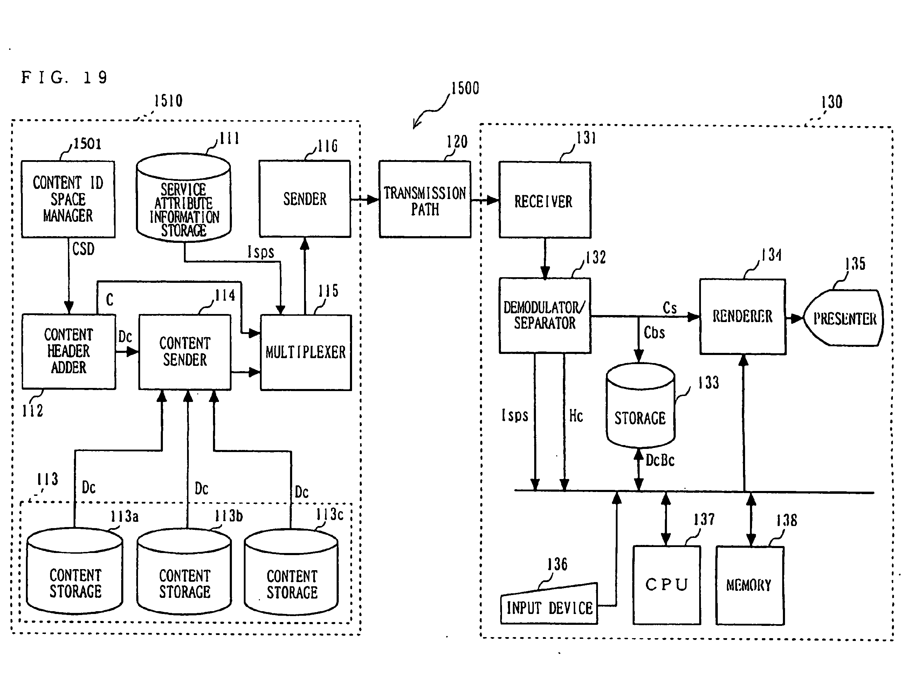

Next, referring to FIGs. 19, 20, 21, 22, and 23, a non-storage type broadcasting system according to a fourth embodiment of the present invention is described. As shown in FIG. 19, similar to the non-storage type broadcasting system 100 shown in FIG. 1, a non-storage type broadcasting system 1500 according to the present embodiment includes a transmission device 1510, a transmission path 120, and a non-storage type reception device 130. The transmission device 1510 is such that the transmission device 110 of the non-storage type broadcasting system 100 is additionally provided with a content ID space manager 1501.

Hereinbelow, features specific to the non-storage type broadcasting system 1500 are mainly described, and the descriptions of features common to the non-storage type broadcasting system 100 are omitted.

For each service, the content ID space manager 1501 manages the range (space) of values for the content ID of content belonging to the service, thereby designating browser content Cbs.

For example, the content ID space is defined by the conditions that the content is a content having the service ID "S1" if the content ID is between 100 and 199; the content is a content having the service ID "S2" if the content ID is between 200 and 299; the content is a content having the service ID "S3" if the content ID is between 300 and 399, and the content is browser content Cb (Cbc) if the content ID is between 0 and 99.

The content ID space manager 1501 generates a content space definition CSD and outputs it to the content header adder 112. Based on the content space definition CSD, the content header adder 112 rewrites the value for the item of the content ID, which is stored in the content header Hc (HcBs) of the content body Dc (DcBs) supplied from each of the content storages 113a, 113b, and 113c via the content sender 114, into the value of a content ID adapted to the defined content ID space.

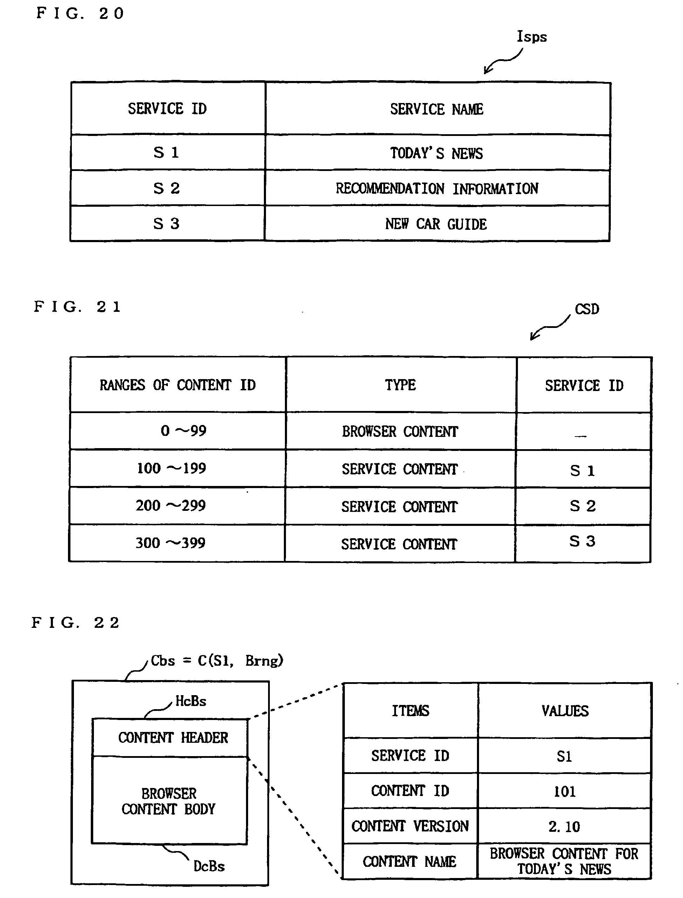

FIG. 21 shows an exemplary content space definition CSD. The content space definition CSD contains information for defining content spaces, as well as a column indicating ranges of content IDs. In this example, for each service, content is generated in which the content ID is freely set within the range from 0 to 99, and the content is stored in each content storage. Regarding service S1, the browser content Cbs generated from content body Dc supplied from the content storage 113a is outputted if it can be confirmed that the content ID thereof is between 0 and 99. In this case, if the content ID is not between 0 and 99, the browser content Cbs is considered as being an invalid content and thus removed.

For the service content Cs, which is content of the service **S1,** the content ID is converted into a value between 100 and 199 by adding 100 thereto. After the conversion, whether it is between 100 and 199 is confirmed. If so, the service content is outputted, and if it is not between 100 and 199, the service content is considered as being an invalid content and thus removed.

Note that during the conversion, similar conversion is performed on content IDs used for referencing other contents embedded in the content.

FIG. 22 shows an exemplary structure of the browser content Cbs after the rewriting by the content ID space manager 1501. In the content header HcBs of the browser content Cbs, the content ID is 001 which falls within the range from 0 to 999 which is defined as the range of the content ID of the browser content Cb.

Also, the content ID space manager 1501 adds information for defining a content ID space to the service attribute information stored in the service attribute information storage 111.

FIG. 20 shows exemplary service attribute information Isps. The contents of the service attribute information Isps are the same as those of the service attribute information Isp according to the first embodiment shown in FIG. 4. Specifically, the operation of activating the browser content Cbs in accordance with the present embodiment is basically the same as the operation in accordance with the first embodiment described with reference to FIG. 9, except that the service attribute information Isp is changed to Isps and the target content C is changed to the browser content Cbs. Accordingly, the description of the operation is omitted.

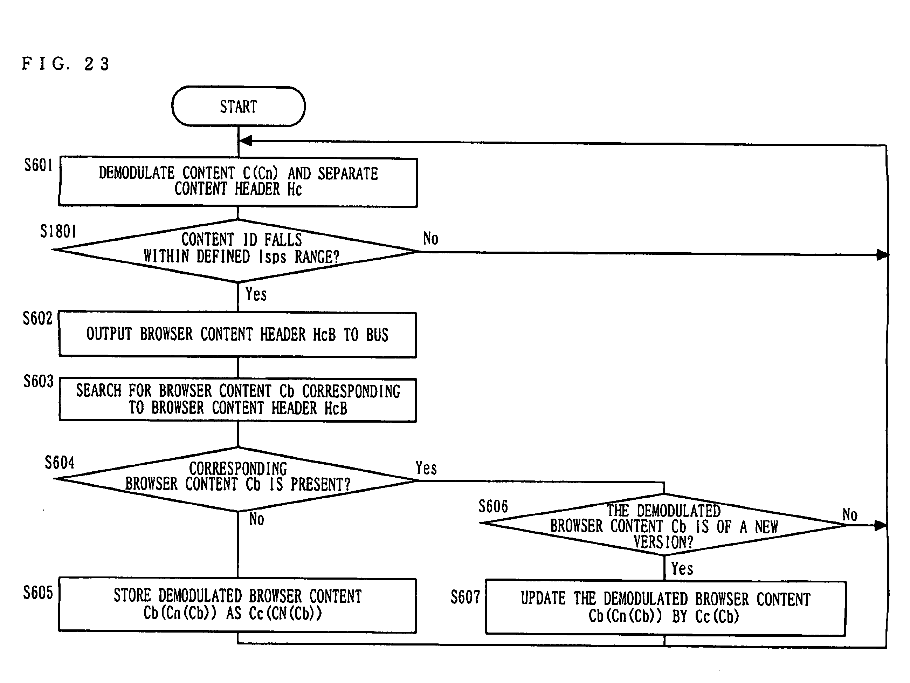

Next, referring to FIG. 23, an operation of updating the browser content Cbs by the non-storage type reception device 130 is described. As shown in FIG. 18, the operation of updating the browser content Cb in accordance with the present embodiment is such that step S608 in the flowchart shown in FIG. 10 is replaced by steps S1801 and S1402.

Specifically, at step S1801, based on content C (Cn) demodulated and a content header Hc separated at step S601, a search is conducted for a content C in a selected service, which has a content ID falling within the range of the browser content Cbs designated by the service attribute information Isps. If any corresponding content C is found, the procedure proceeds to the next step S602. On the other hand, if no corresponding content C is found, the procedure returns to the above-described step S601.

As described above, the non-storage type broadcasting system 1500 manages the space for content IDs, so that a content having a content ID corresponding to a specific value designated by the management can be designated as the browser content Cbs. In this manner, the browser content Cbs can be designated without preparing any specific field (in this example, a column) in the content header HcBs, for example.

That is, if it is ensured that only the content provider stores the content body Dc corresponding to the service thereof into the content storage 113, whatever content C is stored in the content storage 113, it is possible to prohibit the browser content Cb from being incorrectly designated for a different service and being executed in the non-storage type reception device 130.

In the present embodiment, if a single content ID space is provided for all of a plurality of service providers, it is possible to predetermine the range of the content ID to be taken by the browser content Cb and thereby to prevent the browser content Cb from being incorrectly designated by the plurality of service providers. Only content ID fields may be used without preparing new fields in content headers, for example , therefore it is possible to readily use content reception-related parts of a conventional non-storage type reception device without significantly changing a conventional sending device.

While the invention has been described in detail, the foregoing description is in all aspects illustrative and not restrictive. It is understood that numerous other modifications and variations can be devised without departing from the scope of the invention.

Where an existing broadcasting infrastructure is used to implement browser transmission in the non-storage type broadcasting system of the present invention, it is desired or required that signal format for the broadcasting standard should be satisfied.

Reason 1: In digital broadcasting, it is prohibited to send radio waves other than those in signal formats defined by law or standards. Accordingly, introduction of a new signal format does not meet requirements of law or standards, therefore in the worst cases, the broadcaster might be deprived of the license of broadcasting.

Reason 2: The introduction of a new signal format might cause malfunction of reception devices having been connected to the broadcasting infrastructure. For example, the estimated life of a digital television set is about ten years. In this case, the requirements are not satisfied in that a currently receivable radio signal does not cause malfunction of a television set which has been shipped ten years ago.

Reason 3: The introduction of a new signal format entails significant cost in upgrading and testing broadcasting facility, and thus is not practical.

Reason 4: If requirements about an existing broadcasting standard signal format are satisfied, it is not necessary to provide an additional fixed bandwidth for browser transmission in addition to a bandwidth for transmitting signal content. That is, the same band is used for both content transmission and browser transmission. Thus, it is possible to prevent the occurrence of the waste due to the use of different bandwidths between the content and browser, e.g. , the bandwidth is insufficient for content transmission, while the bandwidth for browser transmission is available. Further, it is not necessary to separately prepare a mechanism for managing the bandwidth for browser transmission.

Reason 5: If the requirements about an existing broadcasting standard signal format are satisfied, it is possible to receive a browser simultaneously with content. It is often the case that a typical conventional reception device is able to receive only one broadcast channel at a time under the constraint of cost, etc. The browser is transmitted on a channel different from that on which a television program (content) is being broadcast. Thus, a channel for transmitting the browser is received in late-night hours during which no content is being received, and browser replacement is carried out. According to the present invention, in such a case, the same broadcast channel is received under the situation where a browser is desired at the very moment of receiving content, whereby it is possible to immediately receive the browser required for that content.

Reason 6: In the present invention, limited computation resources (ROM capacity, RAM capacity, CPU processing speed) of a receiver can be effectively used regardless of a new or existing signal format. If the transmission scheme for the browser is the same as that for the content, it is meant that there is only one transmission protocol for the browser and the content.

In general, in order to implement a protocol stack, which is software for receiving protocols, the ROM capacity for storing programs required for processing for each protocol and the RAM capacity for the implementation are required. In the present invention, there is only one protocol, and therefore the ROM and RAM capacities may be slightly greater than those of even a reception device which cannot update the browser. Further, overhead for switching between protocols is not required, therefore it is possible to simultaneously receive the browser and the content at about the same CPU processing speed.

Reason 7: In the present invention, the time to receive the content and the browser is completely controlled based on the time at which the browser contained in the content is transmitted from the transmission side regardless of a new or existing signal format. It is possible for the transmission side to provide control such that the content is not sent out while the browser is being sent and thereby to prevent the load on the receiver from increasing more than required. Also, by sending out a browser, which is required for presenting a specific content, at an appropriate time, it is made possible to ensure based on control by the broadcasting side that a suitable browser has always been received upon receipt of the content. The control does not require the computation resources of the receiver side.

Reason 8: In the present invention, only one-way data transmission from a sending device to a reception device is required for execution regardless of a new or existing signal format. Therefore, it is implementable without requiring any communication infrastructure capable of transmitting any information to the sending device via an additional communication line or the like. In the case where there are millions of reception devices, even if it is necessary to replace browsers simultaneously, the sending device is only required to broadcast necessary information. Thus, the implementation is relatively easy because it is not necessary to prepare a server or a communication line for accepting browser transmission requests from millions of reception devices.

### INDUSTRIAL APPLICABILITY

Thus, the present invention is advantageous in a non-storage type information service system which automatically provide the user in real-time with a presenter required by the user for viewing a desired content with a viewer.

## Claims

1. A non-storage type broadcasting system (10C) for providing one or more services (S) composed of a content (C) in real-time for viewing by a user and providing a user interlace (B) unique to each (Sm) of the services (S), the system comprising:
transmission means (110) for sending out a control content (Cb), which implements the user interface (B) , as a part or whole of the content (C);
reception means (130) for receiving the sent control content, (Cb) and activating the received control content (Cb) to execute the user interface (B);
wherein the user interface (B) is transmitted/received as a content;
**characterized in that** the transmission means (110) include:
content sending means (112) for sending out a content (C) containing the control content (Cbc);
service attribute information sending means (111) for sending out service attribute information (Isp) indicatingdetails of the services; and
wherein the reception means (130) includes control content identification means (S504) for identifying the control content (Cb) from among received contents (C) based on the received contents (C, Hc) and the service attribute information (Isp).

2. The non-storage type broadcasting system (100) according to claim 1, wherein the control content (Cb) is a browser (B) for the content (C).

3. The non-storage type broadcasting system (100) according to claim 1,
wherein the content sending means (112) includes content header addition means (112) for adding, to the content (C), a content header (Hc) which defines details of the content, and
wherein the reception means (130) identifies the control content (Cb) from among the received contents (C) based on content headers (Hc) of the received contents (C, Hc).

4. The non-storage type broadcasting system (700) according to claim 1,
wherein the transmission means (710) further includes electronic signature means (711) for applying an electronic signature to the control content (Cbc),
wherein the service attribute information sending means (111) sends out a public key (KP) of the electronic signature (Sg) in the service attribute information (Isp),
wherein thereceptionmeans (730) further includes signature authentication means (138; S2002) for authenticating the electronic signature with the public key (KP) contained in received service attribute information (Isp), and
wherein the control content (Cb) is identified by authenticating the electronic signature.

5. The non-storage type broadcasting system (700) according to claim 1, wherein the authentication by the electronic signature (Sg) is performed using a key independent of each service.

6. The non-storage type broadcasting system (1500) according to claim 1,
wherein the content sending means (112) further includes content ID space management means for sending out information (CSD) which defines a partial space of an ID space of the content: (C), and
wherein the reception means (130) further includes identification means (S1801) for identifying the control content (Cb) based on whether a content ID falls within the partial space.

7. A control content transmission method for use in a non-storage type broadcasting system (100) for providing one or more services (S) composed of a content (C) in real-time for viewing by a user, the method providing a user interface (B) unique to each (Sm) of the services (S), the method comprising:
a step of sending out a control content (Cb), which implements the user interface (B), as a part or whole of the content (C);
a reception step (S501-S505) of receiving the sent control content (Cb) and activating the received control content (Cb) to execute the user interface (B);
**characterized in** a transmission step including:
a content sending step of sending out a content (C) containing the control content (Cbc);
a service attribute information sending step of sending out service attribute information (Isp) indicating details of the services; and
wherein the reception step (S501-S505) includes a control content step (S504) of identifying the control content (Cb) from among received contents (C) based on the received contents (C, Hc) and the service attribute information (Isp).

8. The control content transmission method according to claim 7, wherein the control content (Cb) is a browser (B) for the content (C).

9. The control content transmission method according to claim 7,
wherein the content sending step includes a content header addition step of adding, to the content (C), a content header (Hc) which defines details of the content, and
wherein the reception step (S501-S505) further includes a stepof identifying the control content (Cb) from among the received contents (C) based on content headers (Hc) of the receivedcontents (C, Hc).

10. The control content transmission method (700) according to claim 7,
wherein the transmission step further includes an electronic signature step (711) of applying an electronic signature to the control content (Cbc),
wherein the service attribute information sending step further includes a service attribute information sending step of sending out a public key (KP) of the electronic signature (Sg) in the service attribute information (Isp), and
wherein The reception step (S501-S505) further includes:
a signature authentication step (S1002) of authenticating the electronic signature with the public key (KP) contained in received service attribute information (Isp); and
a step (S1003) of identifying the control content (Cb) by authenticating the electronic signature.

11. The control content transmission method according to claim 7, wherein the authentication by the electronic signature (Sg) is performed using a key independent of each service.

12. The control content transmission method according to claim 7,
wherein the content sending step further includes a content ID space management step of sending out information (CSD) which defines a partial space of an ID space of the content (C), and
wherein the reception step (S501-S505) further includes an identification step (S1801) of identifying the control content (Cb) based on whether a content ID falls within the partial space.

13. A reception device (130) for use in a non-storage type broadcasting system (100) for providing one or more services (S) composed of a content (C) in real-time for viewing by a user and providing a user interface (B) unique to each (Sm) of the services (S), the reception device (130) receiving a control content. (Cb) which implements the user interface (B), the control content being transmitted as a part or whole of the content (C) and having added thereto service attribute information (Isp) indicating details of the services, the reception device (130) comprising:
reception means (131) forreceivingcontents (C) transmitted from the transmitted (110);
extraction means (132) for demodulating the received contents (C) and extracting the contents (C, Hc) and the service attribute information (Isp); and
control content identificationmeans (S504) for identifying the control content (Cb) from among the received contents (C) based on the extracted contents (C, Hc) and the service attribute information (Isp).

14. The reception device (130) according to claim 13, wherein in the non-storage type broadcasting system (100), the content (C) is transmitted after being further added with a content header (Hc) which defines details of the content,
wherein the extraction means (132) further extracts the content header (Hc) from the received contents (C), and
wherein the control content identification means (S504) identifies the control content (Cb) from among the received contents (C) based on the extracted content header (Hc).

15. The reception device (730) according to claim 13, wherein in the non-storage type broadcasting system (700), the content (C) of the control content (Cbc) is signed with an electronic signature, and a public key (KP) of the electronic signature (Sg) is sent out in the service attribute information, (Isp),
wherein the reception device (730) further includes signature authentication means (138; S1002) for authenticating the electronic signature with the public key (KP) contained in received service attribute information (Isp), and
wherein The control content identification means (S504) identifies the control content (Cb) by authenticating the electronic signature.

16. The reception device (730) according to claim 15, wherein the authentication by the electronic signature (Sg) is performed using a key independent of each service.

17. A non-storage type broadcasting system (1500) comprising a reception device (130) according to claim 13,
wherein in the non-storage type broadcasting system (1500), the content (C) is added with information (CSD) which defines a partial space of an ID space of the content (C), and
wherein the identificationmeans (S1801) further identifies the control content (Cb) based on whether a content ID falls within the partial space.

## Patentansprüche

1. Nichtspeicherndes Rundfunksystem (10C) zum Zurverfügungstellen eines oder mehrerer Dienste (S) zusammengestellt aus einem Inhalt (C) in Echtzeit zum Anschauen durch einen Benutzer und Zurverfügungstellen einer Benutzerschnittstelle (B), welche spezifisch für jeden (Sm) der Dienste (S) ist, wobei das System umfasst:
Übertragungsmittel (110) zum Aussenden eines Steuerinhalts (Cb), welcher die Benutzerschnittstelle (B) implementiert, als einen Teil oder ein Ganzes des Inhalts (C);
Empfangsmittel (130) zum Empfangen des gesendeten Steuerinhalts (Cb) und zum Aktivieren des empfangenen Steuerinhalts (Cb), um die Benutzerschnittstelle (B) auszuführen;
wobei die Benutzerschnittstelle (B) als ein Inhalt übertragen/empfangen wird;
**dadurch gekennzeichnet, dass** die Übertragungsmittel (110) enthalten:
Inhaltsendemittel (112) zum Aussenden eines den Steuerinhalt (Cbc) enthaltenden Inhalts (C);
Dienstattributinformationsendemittel (111) zum Aussenden von Dienstattributinformationen (Isp), welche Details der Dienste anzeigt; und
wobei das Empfangsmittel (130) Steuerinhaltsidentifikationsmittel (S504) zum Identifizieren des Steuerinhalts (Cb) aus empfangenen Inhalten (C) auf der Grundlage der empfangenen Inhalte (C, Hc) und der Dienstattributinformation (Isp) enthält.

2. Nichtspeicherndes Rundfunksystem (100) nach Anspruch 1, wobei der Steuerinhalt (Cb) ein Browser (B) für den Inhalt (C) ist.

3. Nichtspeicherndes Rundfunksystem (100) nach Anspruch 1,
wobei das Inhaltsendemittel (112) Inhaltskopfhinzufügemittel (112) zum Hinzufügen eines Inhaltskopfs (Hc), welcher Details des Inhalts definiert, zum Inhalt (C) enthält, und
wobei das Empfangsmittel (130) den Steuerinhalt (Cb) aus den empfangenen Inhalten (C) auf der Grundlage von Inhaltsköpfen (Hc) der empfangenen Inhalte (C, Hc) identifiziert.

4. Nichtspeicherndes Rundfunksystem (700) nach Anspruch 1,
wobei das Übertragungsmittel (710) weiterhin elektronische Signaturmittel (711) zum Applizieren einer elektronischen Signatur auf den Steuerinhalt (Cbc) enthält,
wobei das Dienstattributinformationsendemittel (111) einen öffentlichen Schlüssel (KP) der elektronischen Signatur (Sg) in der Dienstattributinformation (Isp) aussendet,
wobei das Empfangsmittel (730) weiterhin Signaturauthentifizierungsmittel (138; S1002) zum Authentifizieren der elektronischen Signatur mit dem in der empfangenen Dienstattributinformation (Isp) enthaltenen öffentlichen Schlüssel (KP) enthält, und
wobei der Steuerinhalt (Cb) durch Authentifizieren der elektronischen Signatur identifiziert wird.

5. Nichtspeicherndes Rundfunksystem (700) nach Anspruch 1, wobei die Authentifizierung durch die elektronische Signatur (Sg) unter der Verwendung eines für jeden Dienst unabhängigen Schlüssels durchgeführt wird.

6. Nichtspeicherndes Rundfunksystem (1500) nach Anspruch 1,
wobei das Inhaltsendemittel (112) weiterhin Inhalts-ID-Raumverwaltungsmittel zum Aussenden von Information (CSD) enthält, welche einen partiellen Raum eines ID-Raums des Inhalts (C) definiert, und
wobei das Empfangsmittel (130) weiterhin Identifikationsmittel (S1801) zum Identifizieren des Steuerinhalts (Cb) auf der Grundlage enthält, ob eine Inhalts-ID in den partiellen Raum fällt.

7. Steuerinhaltsübertragungsverfahren zur Verwendung in einem nichtspeichernden Rundfunksystem (100) zum Zurverfügungstellen eines oder mehrerer Dienste (S) zusammengesetzt aus einem Inhalt (C) in Echtzeit zum Anschauen durch einen Benutzer, wobei das Verfahren eine Benutzerschnittstelle (B) zur Verfügung stellt, welche spezifisch für jeden (Sm) der Dienste (S) ist, wobei das Verfahren umfasst:
einen Aussendeschritt eines Steuerinhalts (Cb), welcher die Benutzerschnittstelle (B) implementiert, als einen Teil oder ein Ganzes des Inhalts (C);
einen Empfangsschritt (S501-S505) des Empfangens des gesendeten Steuerinhalts (Cb) und des Aktivierens des empfangenen Steuerinhalts (Cb), um die Benutzerschnittstelle (B) auszuführen;
**gekennzeichnet durch** einen Übertragungsschritt, enthaltend:
einen Inhaltsendeschritt des Aussendens eines den Steuerinhalt (Cbc) enthaltenden Inhalts (C);
einen Dienstattributinformationssendeschritt des Aussendes von Dienstattributinformation (Isp), welche Details der Dienste anzeigt; und
wobei der Empfangsschritt (S501-S505) einen Steuerinhaltsschritt (S504) des Identifizierens des Steuerinhalts (Cb) aus empfangenen Inhalten (C) auf der Grundlage der empfangenen Inhalte (C, Hc) und der Dienstattributinformation (Isp) enthält.

8. Steuerinhaltsübertragungsverfahren nach Anspruch 7, wobei der Steuerinhalt (Cb) ein Browser (B) für den Inhalt (C) ist.

9. Steuerinhaltsübertragungsverfahren nach Anspruch 7,
wobei der Inhaltsendeschritt einen Inhaltskopfhinzufügeschritt des Hinzufügens eines Inhaltskopfs (Hc), welcher Details des Inhalts definiert, zum Inhalt (C) enthält, und
wobei der Empfangsschritt (S501-S505) weiterhin einen Schritt des Identifizierens des Steuerinhalts (Cb) aus den empfangenen Inhalten (C) auf der Grundlage von Inhaltsköpfen (Hc) der empfangenen Inhalte (C, Hc) enthält.

10. Steuerinhaltsübertragungsverfahren (700) nach Anspruch 7,
wobei der Übertragungsschritt weiterhin einen elektronischen Signaturschritt (711) des Applizierens einer elektronischen Signatur auf den Steuerinhalt (Cbc) enthält,
wobei der Dienstattributinformationssendeschritt weiterhin einen Dienstattributinformationssendeschritt des Aussendes eines öffentlichen Schlüssels (KP) der elektronischen Signatur (Sg) in der Dienstattributinformation (Isp) enthält, und
wobei der Empfangsschritt (S501-S505) weiterhin enthält:
einen Signaturauthentifizierungsschritt (S1002) des Authentifizierens der elektronischen Signatur mit dem in der empfangenen Dienstattributinformation (Isp) enthaltenen öffentlichen Schlüssel (KP); und
einen Schritt (S1003) des Identifizierens des Steuerinhalts (Cb) durch Authentifizieren der elektronischen Signatur.

11. Steuerinhaltsübertragungsverfahren nach Anspruch 7, wobei die Authentifizierung durch die elektronische Signatur (Sg) unter der Verwendung eines für jeden Dienst unabhängigen Schlüssels durchgeführt wird.

12. Steuerinhaltsübertragungsverfahren nach Anspruch 7,
wobei der Inhaltsendeschritt weiterhin einen Inhalts-ID-Raumverwaltungsschritt des Aussendes von Information (CSD) enthält, welche einen partiellen Raum eines ID-Raums des Inhalts (C) definiert, und
wobei der Empfangsschritt (S501-S505) weiterhin einen Identifikationsschritt (S1801) des Identifizierens des Steuerinhalts (Cb) auf der Grundlage enthält, ob eine Inhalts-ID in den partiellen Raum fällt.

13. Empfangsvorrichtung (130) zur Verwendung in einem nichtspeichernden Rundfunksystem (100) zum Zurverfügungstellen eines oder mehrerer Dienste (S) zusammengesetzt aus einem Inhalt (C) in Echtzeit zum Anschauen durch einen Benutzer und Zurverfügungstellen einer Benutzerschnittstelle (B), welche spezifisch für jeden (Sm) der Dienste (S) ist, wobei die Empfangsvorrichtung (130) einen Steuerinhalt (Cb) empfängt, welcher die Benutzerschnittstelle (B) implementiert, wobei der Steuerinhalt als ein Teil oder ein Ganzes des Inhalts (C) übertragen wird und dazu hinzugefügt eine Dienstattributinformation (Isp) aufweist, welche Details der Dienste anzeigt, wobei die Empfangsvorrichtung (130) umfasst:
Empfangsmittel (131) zum Empfangen von vom Übertrager (110) übertragenen Inhalten (C);
Extraktionsmittel (132) zum Demodulieren der empfangenen Inhalte (C) und Extrahieren der Inhalte (C, Hc) und der Dienstattributinformation (Isp); und
Steuerinhaltsidentifikationsmittel (S504) zum Identifizieren des Steuerinhalts (Cb) aus den empfangenen Inhalten (C) auf der Grundlage der extrahieren Inhalte (C, Hc) und der Dienstattributinformation (Isp).

14. Empfangsvorrichtung (130) nach Anspruch 13,
wobei im nichtspeichernden Rundfunksystem (100) der Inhalt (C) übertragen wird, nachdem er weiterhin mit einem Inhaltskopf (Hc) ergänzt wird, welcher Details des Inhalts definiert,
wobei das Extraktionsmittel (132) weiterhin den Inhaltskopf (Hc) aus den empfangenen Inhalten (C) extrahiert, und
wobei das Steuerinhaltsidentifikationsmittel (S504) den Steuerinhalt (Cb) aus den empfangenen Inhalten (C) auf der Grundlage des extrahierten Inhaltskopfs (Hc) identifiziert.

15. Empfangsvorrichtung (730) nach Anspruch 13,
wobei im nichtspeichernden Rundfunksystem (700) der Inhalt (C) des Steuerinhalts (Cbc) mit einer elektronischen Signatur signiert ist, und ein öffentlicher Schlüssel (KP) der elektronischen Signatur (Sg) in der Dienstattributinformation (Isp) ausgesendet wird,
wobei die Empfangsvorrichtung (730) weiterhin Signaturauthentifizierungsmittel (138; S1002) zum Authentifizieren der elektronischen Signatur mit dem in der empfangenen Dienstattributinformation (Isp) enthaltenen öffentlichen Schlüssel (KP) enthält, und
wobei das Steuerinhaltsidentifikationsmittel (S504) den Steuerinhalt (Cb) durch Authentifizieren der elektronischen Signatur identifiziert.

16. Empfangsvorrichtung (730) nach Anspruch 15,
wobei die Authentifizierung durch die elektronische Signatur (Sg) unter der Verwendung eines für jeden Dienst unabhängigen Schlüssels durchgeführt wird.

17. Nichtspeicherndes Rundfunksystem (1500) umfassend eine Empfangsvorrichtung (130) nach Anspruch 13,
wobei im nichtspeichernden Rundfunksystem (1500) der Inhalt (C) mit einer Information (CSD) ergänzt wird, welche einen partiellen Raum eines ID-Raums des Inhalts (C) definiert, und
wobei die Identifikationsmittel (S1801) weiterhin den Steuerinhalt (Cb) auf der Grundlage identifizieren, ob eine Inhalts-ID innerhalb des partiellen Raums fällt.

## Revendications

1. Système de diffusion (100) de type non-stockage permettant de fournir un ou plusieurs services (S) composés d'un contenu (C) en temps réel destiné à une visualisation par un utilisateur et de fournir une interface utilisateur (B) unique correspondant à chaque service (Sm) parmi les services (S), le système comprenant :
un moyen de transmission (110) pour envoyer un contenu de commande (Cb), qui implémente l'interface utilisateur (B), comme étant une partie ou l'ensemble du contenu (C) ;
un moyen de réception (130) pour recevoir le contenu de commande envoyé (Cb) et pour activer le contenu de commande reçu (Cb) afin d'exécuter l'interface utilisateur (B) ;
dans lequel l'interface utilisateur (B) est transmise/reçue en tant que contenu ;
**caractérisé en ce que** le moyen de transmission (110) comporte :
un moyen d'envoi de contenu (112) pour envoyer un contenu (C) contenant le contenu de commande (Cbc) ;
un moyen d'envoi d'informations sur l'attribut de service (111) pour envoyer des informations sur l'attribut de service (Isp) indiquant les détails des services ; et
dans lequel le moyen de réception (130) comporte un moyen d'identification du contenu de commande (S504) destiné à identifier le contenu de commande (Cb) parmi les contenus reçus (C) sur la base des contenus reçus (C, Hc) et des informations sur l'attribut de service (Isp).

2. Système de diffusion (100) de type non-stockage selon la revendication 1, dans lequel le contenu de commande (Cb) est un navigateur (B) de contenu (C).

3. Système de diffusion (100) de type non-stockage selon la revendication 1,
dans lequel le moyen d'envoi de contenu (112) comprend un moyen d'ajout d'un en-tête de contenu (112) destiné à ajouter, au contenu (C), un en-tête de contenu (Hc), qui définit les détails du contenu, et
dans lequel le moyen de réception (130) identifie le contenu de commande (Cb) parmi les contenus reçus (C) sur la base des en-têtes de contenu (Hc) inhérents aux contenus reçus (C, Hc).

4. Système de diffusion (700) de type non-stockage selon la revendication 1,
dans lequel le moyen de transmission (710) comprend en outre un moyen de signature électronique (711) destiné à apposer une signature électronique au contenu de commande (Cbc),
dans lequel le moyen d'envoi des informations sur l'attribut de service (111) envoie une clé publique (KP) de la signature électronique (Sg) dans les informations sur l'attribut de service (Isp),
dans lequel le moyen de réception (730) comprend en outre un moyen d'authentification de signature (138 ; S1002) pour authentifier la signature électronique en utilisant la clé publique (KP) contenue dans les informations sur l'attribut de service (Isp), et
dans lequel le contenu de commande (Cb) est identifié en authentifiant la signature électronique.

5. Système de diffusion (700) de type non-stockage selon la revendication 1, dans lequel l'authentification par la signature électronique (Sg) est effectuée en utilisant une clé indépendante pour chaque service.

6. Système de diffusion (1500) de type non-stockage selon la revendication 1,
dans lequel le moyen d'envoi de contenu (112) comprend en outre un moyen de gestion d'un espace ID du contenu destiné à envoyer des informations (CSD) qui définissent un espace partiel d'un espace ID du contenu (C), et
dans lequel le moyen de réception (130) comprend en outre un moyen d'identification (S1801) destiné à identifier le contenu de commande (Cb) sur la base du fait qu'un ID de contenu se trouve dans l'espace partiel.

7. Procédé de transmission d'un contenu de commande à utiliser dans un système de diffusion (100) de type non-stockage permettant de fournir un ou plusieurs services (S) composés d'un contenu (C) en temps réel destiné à une visualisation par un utilisateur, le procédé fournissant une interface utilisateur (B) unique pour chaque service (Sm) parmi les services (S), le procédé comprend:
une étape d'envoi d'un contenu de commande (Cb), qui implémente l'interface utilisateur (B), comme étant une partie ou l'ensemble du contenu (C) ;
une étape de réception (S501-S505) qui consiste à recevoir le contenu de commande envoyé (Cb) et à activer le contenu de commande reçu (Cb) afin d'exécuter l'interface utilisateur (B) ;
**caractérisé par** une étape de transmission comportant :
une étape d'envoi de contenu qui consiste à envoyer un contenu (C) englobant le contenu de commande (Cbc) ;
une étape d'envoi d'informations sur l'attribut de service qui consiste à envoyer des informations sur l'attribut de service (Isp) indiquant les détails des services ; et
dans lequel l'étape de réception (S501-5505) comprend une étape de contenu de commande (S504) qui consiste à identifier le contenu de commande (Cb) parmi les contenus reçus (C) sur la base des contenus reçus (C, Hc) et des informations sur l'attribut de service (Isp).

8. Procédé de transmission d'un contenu de commande selon la revendication 7, dans lequel le contenu de commande (Cb) est un navigateur (E) de contenu (C).

9. Procédé de transmission d'un contenu de commande selon revendication 7,
dans lequel l'étape d'envoi de contenu comprend une étape d'ajout d'un en-tête de contenu consistant à ajouter, au contenu (C), un en-tête de contenu (Hc) qui définit les détails du contenu, et
dans lequel l'étape de réception (S501-S505) comprend en outre une étape d'identification du contenu de commande (Cb) parmi les contenu reçus (C) sur la base des en-têtes de contenu (Hc) inhérents aux contenus reçus (C, Hc).

10. Procédé de transmission (700) d'un contenu de commande selon la revendication 7,
dans lequel l'étape de transmission comporte en outre une étape de signature électronique (711) consistant à apposer une signature électronique au contenu de commande (Cbc),
dans lequel l'étape d'envoi d'informations sur l'attribut de service comprend en outre une étape d'envoi des informations sur l'attribut de service consistant à envoyer une clé publique (KP) de la signature électronique (Sg) dans les informations sur l'attribut de service (Isp), et
dans lequel l'étape de réception (S501-S505) comprend en outre :
une étape d'authentification de la signature (S1002) qui consiste à authentifier la signature électronique en utilisant la clé publique (KP) contenue dans les informations sur l'attribut de service reçues (Isp); et
une étape (S1003) qui consiste à identifier le contenu de commande (Cb) en authentifiant la signature électronique.

11. Procédé de transmission d'un contenu de commande selon la revendication 7, dans lequel l'authentification par la signature électronique (Sg) est effectuée en utilisant une clé indépendante pour chaque service.

12. Procédé de transmission d'un contenu de commande selon la revendication 7,
dans lequel l'étape d'envoi du contenu comprend en outre une étape de gestion d'un espace ID de contenu consistant à envoyer des informations (CSD) qui définissent un espace partiel d'un espace ID de contenu (C), et
dans lequel l'étape de réception (S501-S505) comprend en outre une étape d'identification (S1801) consistant à identifier le contenu de commande (Cb) sur la base du fait qu'un ID de contenu se trouve dans l'espace partiel.

13. Dispositif de réception (130) à utiliser dans un système de diffusion (100) de type non-stockage permettant de fournir un ou plusieurs services (S) composés d'un contenu (C) en temps réel destiné à une visualisation par un utilisateur et de fournir une interface utilisateur (B) unique pour chaque service (Sm) parmi les services (S), le dispositif de réception (130) recevant un contenu de commande (Cb) qui implémente l'interface utilisateur (B), le contenu de commande étant transmis comme une partie ou l'ensemble du contenu (C) et ayant ajouté à ce dernier des informations sur l'attribut de service (Isp) qui indiquent les détails des services, le dispositif de réception (130) comprend :
un moyen de réception (131) destiné à recevoir des contenus (C) transmis à partir de l'émetteur (110) ;
un moyen d'extraction (132) pour démoduler les contenus reçus (C) et extraire les contenus (C, Hc) et les informations sur l'attribut de service (Isp); et
un moyen d'identification du contenu de commande (S504) destiné à identifier le contenu de commande (Cb) parmi les contenus reçus (C) sur la base des contenus extraits (C, Hc) et des informations sur l'attribut de service (Isp).

14. Dispositif de réception (130) selon la revendication 13, dans lequel, dans le système de diffusion (100) de type non-stockage, le contenu (C) est transmis après être en outre ajouté à un en-tête de contenu (Hc) qui définit les détails du contenu,
dans lequel le moyen d'extraction (132) extrait en outre l'en-tête de contenu (Hc) des contenus reçus (C), et
dans lequel le moyen d'identification du contenu de commande (S504) identifie le contenu de commande (Cb) parmi les contenus reçus (C) sur la base de l'en-tête du contenu extrait (Hc).

15. Dispositif de réception (730) selon la revendication 13, dans lequel, dans le système de diffusion (700) de type non-stockage, le contenu (C) englobant le contenu de commande (Cbc) est signé en utilisant une signature électronique, et une clé publique (KP) de la signature électronique (Sg) est envoyée dans les informations sur l'attribut de service (Isp),
dans lequel le dispositif de réception (730) comprend en outre un moyen d'authentification de signature (138 ; S1002) destiné à authentifier la signature électronique en utilisant la clé publique (KP) contenue dans les informations sur l'attribut de service reçues (Isp), et
dans lequel le moyen d'identification du contenu de commande (S504) identifie le contenu de commande (Cb) en authentifiant la signature électronique.

16. Dispositif de réception (730) selon la revendication 15, dans lequel l'authentification par la signature électronique (Sg) est effectuée en utilisant une clé indépendante pour chaque service.

17. Système de diffusion (1500) de type non-stockage comprenant un dispositif de réception (130) selon la revendication 13,
dans lequel dans le système de diffusion (1500) de type non-stockage, le contenu (C) est ajouté à des informations (CSD) qui définissent un espace partiel d'un espace ID du contenu (C), et
dans lequel le moyen d'identification (S1801) identifie en outre le contenu de commande (Cb) sur la base du fait qu'un contenu ID se trouve dans l'espace partiel.
